(19) **Europäisches Patentamt European Patent Office Office européen des brevets**

(11) **EP 4 496 380 A1**

(12) **EUROPEAN PATENT APPLICATION**
published in accordance with Art. 153(4) EPC

(43) Date of publication:
**22.01.2025 Bulletin 2025/04**

(21) Application number: **23784233.1**

(22) Date of filing: **31.03.2023**

(51) International Patent Classification (IPC):
**H04W 28/18** (2009.01)     **G06N 3/04** (2023.01)
**G06N 3/08** (2023.01)

(52) Cooperative Patent Classification (CPC):
**G06N 3/04; G06N 3/044; G06N 3/0442;
G06N 3/048; G06N 3/08; H04W 28/18;
H04W 28/22; H04W 74/08; H04W 80/02**

(86) International application number:
**PCT/CN2023/085703**

(87) International publication number:
**WO 2023/193669 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.04.2022  CN 202210357164**

(71) Applicant: **Huawei Technologies Co., Ltd.
Shenzhen, Guangdong 518129 (CN)**

(72) Inventors:
• **GUO, Ziyang
  Shenzhen, Guangdong 518129 (CN)**
• **LIU, Peng
  Shenzhen, Guangdong 518129 (CN)**
• **YANG, Xun
  Shenzhen, Guangdong 518129 (CN)**
• **LUO, Jiajun
  Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54)     **COMMUNICATION APPARATUS AND METHOD**

(57)     A communication apparatus and method are provided, and may be applied to 802.11 series protocols, such as 802.11be and 802.11bf. The apparatus includes: an input interface, a neural-network processing unit, and an output interface. The neural-network processing unit stores a neural network, and the neural network includes an input layer and an output layer. The input interface is configured to obtain at least one of input indication information, function indication information, output indication information, or parameter indication information. The neural-network processing unit is configured to perform, based on the input layer and the output layer, a function indicated by the function indication information. The output interface is configured to output a result obtained after the neural-network processing unit performs a function. An input layer structure and an output layer structure of the neural network may be determined based on information obtained by the input interface. According to the apparatus, a function implemented by a MAC layer can be implemented based on the neural network, which can simplify complexity of the neural network and facilitate hardware acceleration.

FIG. 5

## Description

This application claims priority to Chinese Patent Application No. 202210357164.4, filed with the China National Intellectual Property Administration on April 6, 2022 and entitled "COMMUNICATION APPARATUS AND METHOD", which is incorporated herein by reference in its entirety.

## TECHNICAL FIELD

This application relates to the field of communication technologies, and in particular, to a communication apparatus and method.

## BACKGROUND

With evolution of wireless network communication technology (Wi-Fi) standards and networks, Wi-Fi systems have become complex. In addition, quality of an architecture of a medium access control (medium access control, MAC) layer plays a key role in overall network performance, such as quality of service (quality of service, QoS) assurance, fairness assurance, and spectrum utilization improvement. Currently, a design for the MAC layer is driven by features. Each feature has a matching algorithm, and algorithms for features are designed independently. Wi-Fi is used as an example. Carrier-sense multiple access with collision avoidance (carrier-sense multiple access with collision avoidance, CSMA/CA) and binary exponential backoff (binary exponential backoff, BEB) are used for channel access, an Intel rate adaptation (for example, may be referred to as Intel Iwl) algorithm is used for rate adaptation, orthogonal frequency division multiple access (orthogonal frequency division multiple access, OFDMA) has a corresponding resource unit (resource unit, RU) allocation algorithm, and channel aggregation also has a corresponding decision algorithm.

With development of artificial intelligence (artificial intelligence, AI) technologies, it has become a trend to apply the artificial intelligence technologies to a next-generation wireless communication system, to improve network performance. However, performance improvement also brings various challenges, such as high complexity and poor interoperability.

Therefore, how to effectively combine AI to improve performance of a MAC layer architecture needs to be urgently resolved.

## SUMMARY

This application provides a communication apparatus and method, so that a function implemented by a MAC layer can be implemented based on a neural network, which can simplify complexity of the neural network and facilitate hardware acceleration.

According to a first aspect, an embodiment of this application provides a communication apparatus. The apparatus includes: an input interface, a neural-network processing unit, and an output interface. The neural-network processing unit stores a neural network, and the neural network includes an input layer and an output layer. The input interface is configured to obtain at least one of input indication information, function indication information, output indication information, or parameter indication information. The neural-network processing unit is configured to perform, based on the input layer and the output layer, a function indicated by the function indication information. A structure of the input layer is determined based on at least one of the following information: the input indication information and the function indication information. A structure of the output layer is determined based on at least one of the following information: the output indication information and the function indication information. The output indication information indicates at least one of the following in the structure of the output layer: a quantity of neurons and an activation function. The parameter indication information indicates at least one of the following information: a bias of a neuron in the neural network and a weight of the neuron in the neural network. The output interface is configured to output a result obtained after the neural-network processing unit performs a function.

According to the communication apparatus provided in this embodiment of this application, a function implemented by a MAC layer can be implemented based on the neural network. For example, when the function performed by the MAC layer changes, the input layer and the output layer of the neural network are adjusted accordingly, so that different functions can be implemented based on the neural network. In other words, different functions can be implemented by adjusting the input layer and the output layer of the neural network, which can effectively simplify complexity of the neural network and facilitate hardware acceleration.

In a possible implementation, the neural network further includes a hidden layer, and a structure of the hidden layer is fixed.

In this embodiment of this application, the structure of the hidden layer is fixed. For example, the structure of the hidden layer can be determined based on the function indicated by the function indication information. According to the hidden layer provided in this embodiment of this application, for different functions implemented by the neural network, performance is relatively good (for example, algorithm performance is relatively good, or a throughput is relatively large, or a delay is relatively low). This not only facilitates hardware acceleration, but also has good scalability.

In a possible implementation, the neural network further includes a hidden layer, and a structure of the hidden layer is the same for different functions.

In this embodiment of this application, different functions correspond to a same hidden-layer structure, which can further simplify complexity of the neural network, and further ensure that performance of the neural network is relatively good when the neural network implements different functions.

In a possible implementation, the parameter indication information indicates at least one of the following information: a bias of a neuron in the structure of the hidden layer, a weight of the neuron in the structure of the hidden layer, a bias of a neuron in the structure of the output layer, and a weight of the neuron in the structure of the output layer.

In a possible implementation, the result obtained after the neural-network processing unit performs a function includes a decision result determined based on at least one of the function indication information and the output indication information. The decision result includes outputting, in a form of a maximum value, a result obtained after the neural-network processing unit performs the function, or outputting, in a probabilistic random selection manner, a result obtained after the neural-network processing unit performs the function.

In a possible implementation, the function indication information indicates any one or more of the following functions: artificial intelligence AI-assisted channel access, AI-assisted channel aggregation, an AI-assisted channel aggregation joint channel access function, AI-assisted rate adaptation, AI-assisted rate adaptation joint channel access, AI-assisted resource unit (resource unit, RU) allocation, AI-assisted spatial multiplexing, AI-assisted frame aggregation, AI-assisted beam management, and AI-assisted multi-link transmission.

In a possible implementation, the input indication information indicates at least one of the following: input information of the neural network, a quantity of pieces of the input information, and a dimension of the input information.

In a possible implementation, the quantity of pieces of the input information and the dimension of the input information are used to determine a quantity of neurons at the input layer.

In a possible implementation, the input information includes any one or more of the following: a carrier sense result, a received power, a modulation and coding scheme (modulation and coding scheme, MCS) used by a data packet, a quantity of multiple-input multiple-output (multiple input multiple output, MIMO) data streams, a channel bandwidth, a queuing delay, an access delay, a channel access behavior, a data packet transmission result, channel information, a channel aggregation status, duration of a carrier sense result, or duration of channel aggregation. The channel access behavior includes access or non-access.

In a possible implementation, the input information further includes any one or more of the following: a packet loss rate, a throughput, a time from a current moment to last successful transmission of the communication apparatus, a time from a current moment to last successful transmission of another communication apparatus on a channel, load information of the communication apparatus, or load information of the another communication apparatus on the channel. The another communication apparatus is a communication apparatus other than the communication apparatus.

According to a second aspect, an embodiment of this application provides a communication apparatus. The communication apparatus includes an input control module, a neural network module, an output control module, and an action decision module. The neural network module includes an input layer and an output layer. The input control module is configured to determine a structure of the input layer based on input indication information and/or function indication information. The output control module is configured to determine a structure of the output layer based on output indication information and/or the function indication information. The neural network module is configured to perform, based on the input layer and the output layer, a function indicated by the function indication information. The action decision module is configured to select an action based on output information of the neural network, and output a decision result obtained after the neural network perform the function.

In a possible implementation, the neural network further includes a hidden layer, and a structure of the hidden layer is fixed.

In a possible implementation, the neural network further includes a hidden layer, and a structure of the hidden layer is the same for different functions.

In a possible implementation, parameter indication information indicates at least one of the following information: a bias of a neuron in the structure of the hidden layer, a weight of the neuron in the structure of the hidden layer, a bias of a neuron in the structure of the output layer, and a weight of the neuron in the structure of the output layer.

In a possible implementation, the decision result is determined based on at least one of the function indication information and the output indication information. The decision result includes outputting, in a form of a maximum value, a result obtained after the neural-network processing unit performs the function, or outputting, in a probabilistic random selection manner, a result obtained after the neural-network processing unit performs the function.

In a possible implementation, the function indication information indicates any one or more of the following functions: artificial intelligence AI-assisted channel access, AI-assisted channel aggregation, an AI-assisted channel aggregation joint channel access function, AI-assisted rate adaptation, AI-assisted rate adaptation joint channel access, AI-assisted resource unit RU allocation, AI-assisted spatial multiplexing, AI-assisted frame aggregation, AI-assisted beam management, and AI-assisted multi-link transmission.

In a possible implementation, the input indication information indicates at least one of the following: input information of the neural network, a quantity of pieces of the input information, and a dimension of the input information.

In a possible implementation, the quantity of pieces of the input information and the dimension of the input information are used to determine a quantity of neurons at the input layer.

In a possible implementation, the input information includes any one or more of the following: a carrier sense result, a received power, a modulation and coding scheme MCS used by a data packet, a quantity of multiple-input multiple-output MIMO data streams, a channel bandwidth, a queuing delay, an access delay, a channel access behavior, a data packet transmission result, channel information, a channel aggregation status, duration of a carrier sense result, or duration of channel aggregation. The channel access behavior includes access or non-access.

In a possible implementation, the input information further includes any one or more of the following: a packet loss rate, a throughput, a time from a current moment to last successful transmission of the communication apparatus, a time from a current moment to last successful transmission of another communication apparatus on a channel, load information of the communication apparatus, or load information of the another communication apparatus on the channel. The another communication apparatus is a communication apparatus other than the communication apparatus.

According to a third aspect, an embodiment of this application provides a communication method. The method is applied to a first communication apparatus, the first communication apparatus stores a neural network, and the neural network includes an input layer and an output layer. The method includes: obtaining at least one of input indication information, function indication information, output indication information, or parameter indication information; performing, based on the input layer and the output layer, a function indicated by the function indication information, where a structure of the input layer is determined based on at least one of the following information: the input indication information and the function indication information, a structure of the output layer is determined based on at least one of the following information: the output indication information and the function indication information, the output indication information indicates at least one of the following in the structure of the output layer: a quantity of neurons and an activation function, and the parameter indication information indicates at least one of the following information: a bias of a neuron in the neural network and a weight of the neuron in the neural network; and outputting a result obtained after the neural network performs a function.

In a possible implementation, the neural network further includes a hidden layer, and a structure of the hidden layer is fixed.

In a possible implementation, the neural network further includes a hidden layer, and a structure of the hidden layer is the same for different functions.

In a possible implementation, the parameter indication information indicates at least one of the following information: a bias of a neuron in the structure of the hidden layer, a weight of the neuron in the structure of the hidden layer, a bias of a neuron in the structure of the output layer, and a weight of the neuron in the structure of the output layer.

In a possible implementation, the neural network further includes a hidden layer, and a structure of the hidden layer is fixed. The result obtained after the neural network performs a function includes a decision result determined based on at least one of the function indication information and the output indication information. The decision result includes outputting, in a form of a maximum value, a result obtained after the neural-network processing unit performs the function, or outputting, in a probabilistic random selection manner, a result obtained after the neural-network processing unit performs the function.

In a possible implementation, the neural network further includes a hidden layer, and a structure of the hidden layer is fixed. The function indication information indicates any one or more of the following functions: artificial intelligence AI-assisted channel access, AI-assisted channel aggregation, an AI-assisted channel aggregation joint channel access function, AI-assisted rate adaptation, AI-assisted rate adaptation joint channel access, AI-assisted resource unit RU allocation, AI-assisted spatial multiplexing, AI-assisted frame aggregation, AI-assisted beam management, and AI-assisted multi-link transmission.

In a possible implementation, the neural network further includes a hidden layer, and a structure of the hidden layer is fixed. The input indication information indicates at least one of the following: input information of the neural network, a quantity of pieces of the input information, and a dimension of the input information.

In a possible implementation, the neural network further includes a hidden layer, and a structure of the hidden layer is fixed. The quantity of pieces of the input information and the dimension of the input information are used to determine a quantity of neurons at the input layer.

In a possible implementation, the neural network further includes a hidden layer, and a structure of the hidden layer is fixed. The input information includes any one or more of the following: a carrier sense result, a received power, a modulation and coding scheme MCS used by a data packet, a quantity of multiple-input multiple-output MIMO data streams, a channel bandwidth, a queuing delay, an access delay, a channel access behavior, a data packet transmission result, channel information, a channel aggregation status, duration of a carrier sense result, or duration of channel aggregation. The channel access behavior includes access or non-access.

In a possible implementation, the neural network further includes a hidden layer, and a structure of the hidden layer is fixed. The input information further includes any one or more of the following:

a packet loss rate, a throughput, a time from a current moment to last successful transmission of the first communication apparatus, a time from a current moment to last successful transmission of another first communication apparatus on a channel, load information of the first communication apparatus, or load information of the another first communication apparatus on the channel, where the another first communication apparatus is a first communication apparatus other than the first communication apparatus.

In a possible implementation, the neural network further includes a hidden layer, and a structure of the hidden layer is fixed. The obtaining at least one of input indication information, function indication information, output indication information, or parameter indication information includes: sending, by the STA, a function request message to an access point AP, where the function request message includes the function indication information, and the function request message is used to request to enable the function indicated by the function indication information; receiving, by the STA, a function response message from the AP, where the function response message is used to confirm the function request message; and receiving, by the STA, indication information from the AP, where the indication information includes at least one of the following: the input indication information, the output indication information, and the parameter indication information.

According to a fourth aspect, an embodiment of this application provides a communication method. The method is applied to a second communication apparatus. The method includes: receiving a function request message from a first communication apparatus, where the function request message includes function indication information, and the function request message is used to request to enable a function indicated by the function indication information; sending a function response message to the first communication apparatus, where the function response message is used to confirm the function request message; and sending indication information to the first communication apparatus, where the indication information includes at least one of the following: input indication information, output indication information, and parameter indication information.

In a possible implementation, the method further includes: training a neural network based on the function indicated by the function indication information to obtain the parameter indication information. A parameter of the neural network indicated by the parameter indication information corresponds to the function indicated by the function indication information.

According to a fifth aspect, an embodiment of this application provides a computer-readable storage medium. The computer-readable storage medium is configured to store a computer program. When the computer program is run on a computer, the method according to any one of the third aspect or the possible implementations of the third aspect is performed.

According to a sixth aspect, an embodiment of this application provides a computer-readable storage medium. The computer-readable storage medium is configured to store a computer program. When the computer program is run on a computer, the method according to any one of the fourth aspect or the possible implementations of the fourth aspect is performed.

According to a seventh aspect, an embodiment of this application provides a computer program product. The computer program product includes a computer program or computer code. When the computer program or the computer code is run on a computer, the method according to any one of the third aspect or the possible implementations of the third aspect is performed.

According to an eighth aspect, an embodiment of this application provides a computer program product. The computer program product includes a computer program or computer code. When the computer program or the computer code is run on a computer, the method according to any one of the fourth aspect or the possible implementations of the fourth aspect is performed.

According to a ninth aspect, an embodiment of this application provides a computer program. When the computer program is run on a computer, the method according to any one of the third aspect or the possible implementations of the third aspect is performed.

According to a tenth aspect, an embodiment of this application provides a computer program. When the computer program is run on a computer, the method according to any one of the fourth aspect or the possible implementations of the fourth aspect is performed.

According to an eleventh aspect, an embodiment of this application provides a wireless communication system. The wireless communication system includes a first communication apparatus and a second communication apparatus. The first communication apparatus is configured to perform the method according to any one of the third aspect or the possible implementations of the third aspect. The second communication apparatus is configured to perform the method according to any one of the fourth aspect or the possible implementations of the fourth aspect.

## BRIEF DESCRIPTION OF DRAWINGS

FIG. 1 is a diagram of an architecture of a communication system according to an embodiment of this application;

FIG. 2a is a diagram of a fully connected neural network including three layers;

FIG. 2b is a diagram of a neuron calculating an output based on inputs;

FIG. 3a is a diagram of a structure of an access point according to an embodiment of this application;

FIG. 3b is a diagram of a structure of another access point according to an embodiment of this application;

FIG. 3c is a diagram of a structure of still another access point according to an embodiment of this application;

FIG. 4a is a diagram of a structure of a station according to an embodiment of this application;

FIG. 4b is a diagram of a structure of another station according to an embodiment of this application;

FIG. 4c is a diagram of a structure of still another station according to an embodiment of this application;

FIG. 5 is a diagram of a structure of a communication apparatus according to an embodiment of this application;

FIG. 6 is a diagram of a structure of a hidden layer of a neural network according to an embodiment of this application;

FIG. 7a is a diagram of a structure of another communication apparatus according to an embodiment of this application;

FIG. 7b is a diagram of a structure of a neural network according to an embodiment of this application;

FIG. 8 is a schematic flowchart of a communication method according to an embodiment of this application;

FIG. 9 is a schematic flowchart of another communication method according to an embodiment of this application; and

FIG. 10 is a schematic flowchart of still another communication method according to an embodiment of this application.

## DESCRIPTION OF EMBODIMENTS

To make objectives, technical solutions, and advantages of this application clearer, the following further describes this application with reference to the accompanying drawings.

In the specification, claims, and the accompanying drawings of this application, terms such as "first" and "second" are only intended to distinguish between different objects but do not describe a particular order. In addition, terms "include", "have", or any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in this specification means that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment. It may be understood explicitly and implicitly by a person skilled in the art that an embodiment described in this specification may be combined with another embodiment.

In this application, "at least one" means one or more, "a plurality of" means two or more, "at least two" means two or three or more, and "and/or" is used to describe an association relationship between associated objects and indicates that three relationships may exist. For example, "A and/or B" may indicate the following three cases: Only A exists, only B exists, and both A and B exist. A and B may be singular or plural. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a, b and c".

In an architecture of a MAC layer of a communication apparatus, running of the MAC layer may be driven by features. That is, different features correspond to different algorithms. However, in such a communication apparatus, an algorithm architecture of the MAC layer corresponds to different algorithms for different functions. As a result, the following problems exist when the MAC layer processes the algorithm.

Poor adaptability: An algorithm design is optimized for a specific scenario. For example, if a problem occurs in a scenario, vulnerabilities are fixed for the scenario. However, after the problem is rectified for the scenario, the problem may occur in another scenario.

Mutual exclusion: Features affect each other. For example, after packet loss occurs, an MCS may be reduced, a transmit power may be increased, and channel access may be delayed. However, if decisions are made at the same time, the features affect each other, which may result in $1 + 1 < 2$.

Long development cycle and difficult evolution: After a feature is specified, corresponding feature performance is optimized through continuous investment in research and development (Research and Development, R&D). Once a new MAC feature is available, new research and development work is required.

In an architecture of a MAC layer of another communication apparatus, an algorithm processing architecture of the MAC layer may be reconstructed through AI. For example, a feature may be implemented based on AI. However, such a manner usually requires reconfiguration for a specific feature. Such an independent reconfiguration method has the following problems.

High complexity: Each feature requires design of a set of neural networks.

Incapability to perform multi-vendor interworking: A neural network model trained by an AP requires an additional negotiation mechanism to be sent to STAs from different vendors, and standardization has not been achieved.

Difficult hardware acceleration: Each feature corresponds to a set of neural networks, which is inconvenient for acceleration through dedicated chips.

Poor scalability: In essence, the architecture is rule-based (rule-based). Each feature is independently optimized and developed, resulting in a long development cycle and slow deployment.

In view of this, this application provides a communication apparatus and method, so that a function implemented by a MAC layer can be implemented based on a neural network. For example, when the function performed by the MAC layer changes, an input layer and an output layer of the neural network at the MAC layer are adjusted accordingly, so that different functions can be implemented based on the neural network. Different functions can be implemented by adjusting the input layer and the output layer of the neural network, which can effectively simplify complexity of the neural network and facilitate hardware acceleration. In addition, in an AI-based MAC (which may also be referred to as AI-MAC or neural network-based MAC) algorithm architecture provided in this application, when different functions implemented by the MAC layer need to be implemented by using the neural network, a hidden-layer structure of the neural network may be fixed. That is, the input layer and the output layer may be adjusted based on different functions. Therefore, using a fixed hidden-layer structure for different functions not only facilitates hardware acceleration, but also has good scalability. For example, the fixed hidden-layer structure may be scaled to a MAC feature of next-generation Wi-Fi. It may be understood that the foregoing feature may also be understood as a function (function), an application, a service, or the like. A name of the feature is not limited in this application. For consistency, the following describes an apparatus and a method provided in embodiments of this application by using a function as an example.

The following describes in detail a communication system in this embodiment of this application.

The method provided in this application may be applied to a wireless local area network (wireless local area network, WLAN) system, for example, Wi-Fi. For example, the method provided in this application may be applied to the Institute of Electrical and Electronics Engineers (institute of electrical and electronics engineers, IEEE) 802.11 series protocols, such as the 802.11a/b/g protocol, the 802.11n protocol, the 802.11ac protocol, the 802.11ax protocol, the 802.11be protocol, the 802.11bf protocol, or another future protocol, which are not enumerated one by one herein. The method provided in this application may be further applied to various communication systems, for example, a cellular system (including but not limited to a long-term evolution (long term evolution, LTE) system, a fifth-generation (5th-generation, 5G) communication system, a new communication system (for example, 6G) emerging in future communication development, and the like), an Internet of things (Internet of things, IoT) system, a narrowband Internet of things (narrowband Internet of things, NB-IoT) system, another short-range communication system (including but not limited to Bluetooth (Bluetooth) and ultra-wideband (ultra-wideband, UWB)), and the like.

The method provided in this application may be applied to a scenario in which one node performs data transmission with one or more nodes, for example, single-user uplink/downlink transmission, multi-user uplink/downlink transmission, and device-to-device (device to device, D2D) transmission. Any one of the foregoing nodes may be a communication apparatus in a wireless communication system. This is, the method provided in this application may be implemented by the communication apparatus in the wireless communication system. For example, the communication apparatus may be at least one of an access point (access point, AP) or a station (station, STA).

The access point in this application is an apparatus having a wireless communication function and an AI processing capability, and supports communication or sensing based on a WLAN protocol. The access point has a function of performing communication or sensing with another device (for example, a station or another access point) in a WLAN network. Certainly, the access point may further have a function of performing communication or sensing with another device. Alternatively, the access point is equivalent to a bridge that connects a wired network and a wireless network. A main function of the access point is to connect various wireless network clients together and then connect the wireless network to the Ethernet. In a WLAN system, the access point may be referred to as an access point station (AP STA). The apparatus having a wireless communication function may be an entire device, or may be a chip or a processing system installed in an entire device, or the like. The device in which the chip or the processing system is installed may implement a method and a function in embodiments of this application under control of the chip or the processing system. The AP in embodiments of this application is an apparatus that provides a service for the STA, and may support 802.11 series protocols. For example, the access point may be an access point for a terminal (for example, a mobile phone) to access a wired (or wireless) network, and is mainly deployed at home, in a building, and in a park. A typical coverage radius is tens of meters to hundreds of meters. Certainly, the access point may alternatively be deployed outdoors. For another example, the AP may be a communication entity, for example, a communication server, a router, a switch, or a bridge. The AP may include a macro base station, a micro base station, a relay station, and the like in various forms. Certainly, the AP may alternatively be a chip or a processing system in these devices in various forms, to implement the method and function in embodiments of this application. The access point in this application may be an extremely high throughput (extremely high throughput, EHT) AP, an access point in a future Wi-Fi standard, or the like.

The station in this application is an apparatus having a wireless communication function and an AI processing capability, and supports communication or sensing based on a WLAN protocol. The station has a capability of performing communication or sensing with another station or access point in the WLAN network. In the WLAN system, the station may be referred to as a non-access point station (non-access point station, non-AP STA). For example, the STA is any user communication device that allows a user to perform communication or sensing with the AP and further communicate with the WLAN. The apparatus having the wireless communication function may be an entire device, or may be a chip or a processing system installed in an entire device, or the like. The device in which the chip or the processing system is installed may implement a method and a function in embodiments of this application under control of the chip or the processing system. For example, the station may be a wireless communication chip, a wireless sensor, a wireless communication terminal, or the like, and may also be referred to as a user equipment. For example, the station may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, a computer supporting a Wi-Fi communication function, or the like.

The WLAN system can provide high-speed and low-latency transmission. With the continuous evolution of WLAN application scenarios, the WLAN system is to be applied to more scenarios or industries, for example, an Internet of things industry, an Internet of vehicles industry, a banking industry, an enterprise office, a stadium and an exhibition hall, a concert hall, a hotel room, a dormitory, a ward, a classroom, a supermarket, a square, a street, a production workshop, and a warehouse. Certainly, a device (for example, an access point or a station) supporting WLAN communication or sensing may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the Internet of things, an entertainment terminal (for example, a wearable device such as an AR device or a VR device), a smart device (for example, a printer, a projector, a speaker, or a stereo) in a smart office, an Internet of vehicles device in the Internet of vehicles, an infrastructure (for example, a vending machine, a self-service navigation console in a supermarket, a self-service cashier, or a self-service meal-ordering machine) in a daily life scenario, a device in a large-scale stadium and music venue, and the like. For example, the access point and the station may be devices used in the Internet of vehicles, nodes, sensors, or the like in the Internet of things (Internet of things, IoT), smart cameras, smart remote controls, or smart water meters and smart electricity meters in a smart home, sensors in a smart city, and the like. Specific forms of the STA and the AP are not limited in embodiments of this application, and are merely examples for description herein.

Although this application is mainly described by using an example in which an IEEE 802.11 network is deployed, a person skilled in the art easily understands that various aspects in this application may be extended to deploy other networks using various standards or protocols, for example, a high-performance radio LAN (high performance radio LAN, HIPERLAN) (a wireless standard similar to the IEEE 802.11 standard, mainly used in Europe), a wide area network (wide area network, WAN), a wireless local area network (WLAN), a personal area network (personal area network, PAN), another network that is known or developed in the future, or the like.

For example, a communication system to which the method provided in this application is applied may include an access point (AP) and a station (STA), or a plurality of access points (APs), or a plurality of stations (STAs). The access point may alternatively be understood as an access point entity, and the station may alternatively be understood as a station entity. For example, this application may be applied to a scenario in which the AP performs communication or sensing with the STA in the WLAN. Optionally, the AP may perform communication or sensing with a single STA, or the AP may simultaneously perform communication or sensing with a plurality of STAs. For another example, this application may be applied to a multi-AP coordination scenario in the WLAN. For another example, this application may be applied to a scenario in which a STA performs D2D communication with another STA in the WLAN. Both the AP and the STA may support a WLAN communication protocol. The communication protocol may include an IEEE 802.11 series protocol, for example, may be applied to an 802.11be standard, or may be applied to a standard after 802.11be.

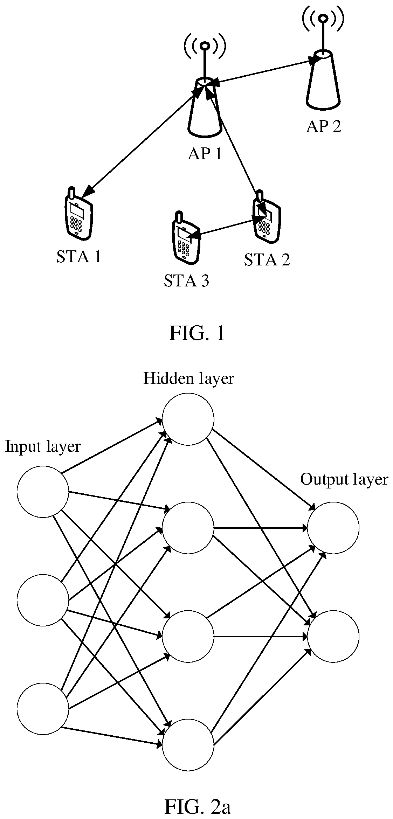

FIG. 1 is a diagram of an architecture of a communication system according to an embodiment of this application. The communication system may include one or more APs and one or more STAs. FIG. 1 shows two access points, such as an AP 1 and an AP 2, and three stations, such as a STA 1, a STA 2, and a STA 3. It may be understood that the one or more APs may communicate with the one or more STAs. Certainly, the APs may communicate with each other, and the STAs may communicate with each other.

It may be understood that, in FIG. 1, an example in which the STA is a mobile phone and the AP is a router is used, and this does not indicate a limitation on types of the AP and the STA in this application. In addition, it may be understood that FIG. 1 shows only two APs and three STAs as an example. However, there may be more or fewer APs or STAs. This is not limited in this application.

Before the communication apparatus in this application is described, terms in embodiments of this application are first described.

1. Neural network

The neural network (neural network, NN) is a machine learning technology that simulates a human brain neural network to implement artificial intelligence. The neural network includes at least three layers: one input layer, one hidden layer (which may also be referred to as an intermediate layer), and one output layer. A deeper neural network may include more hidden layers between the input layer and the output layer.

An internal structure and implementation of a simplest neural network are described by using the simplest neural network as an example. FIG. 2a is a diagram of a fully connected neural network including three layers. As shown in FIG. 2a, the neural network may include three layers: an input layer, a hidden layer, and an output layer. The input layer has three neurons, the hidden layer has four neurons, and the output layer has two neurons. Neurons at each layer are fully connected to neurons at a next layer. Each connection line between neurons corresponds to a weight, and these weights may be updated through training. Each neuron at the hidden layer and the output layer may further correspond to a bias, and these biases may be updated through training. Updating the neural network means updating these weights and biases. In addition, the weight and the bias shown herein may also be understood as parameters (for example, parameters indicated by using parameter indication information) of the neural network described below. If a structure of the neural network is known, for example, a quantity of neurons included in each layer, how an output of a previous neuron is input to a subsequent neuron (that is, a connection relationship between neurons), and parameters of the neural network, namely, a weight and a bias, all information of the neural network is known.

It may be understood that the weight may be understood as a parameter corresponding to a connection line between different neurons. Therefore, for ease of understanding, in the following, weights on a connection line between a neuron at the input layer and a neuron at the hidden layer are collectively referred to as a weight of a neuron in a structure of the hidden layer, weights on a connection line between neurons at the hidden layer are also referred to as the weight of a neuron in a structure of the hidden layer, and weights on a connection line between a neuron at the hidden layer and a neuron at the output layer is referred to as a weight of a neuron in a structure of the output layer.

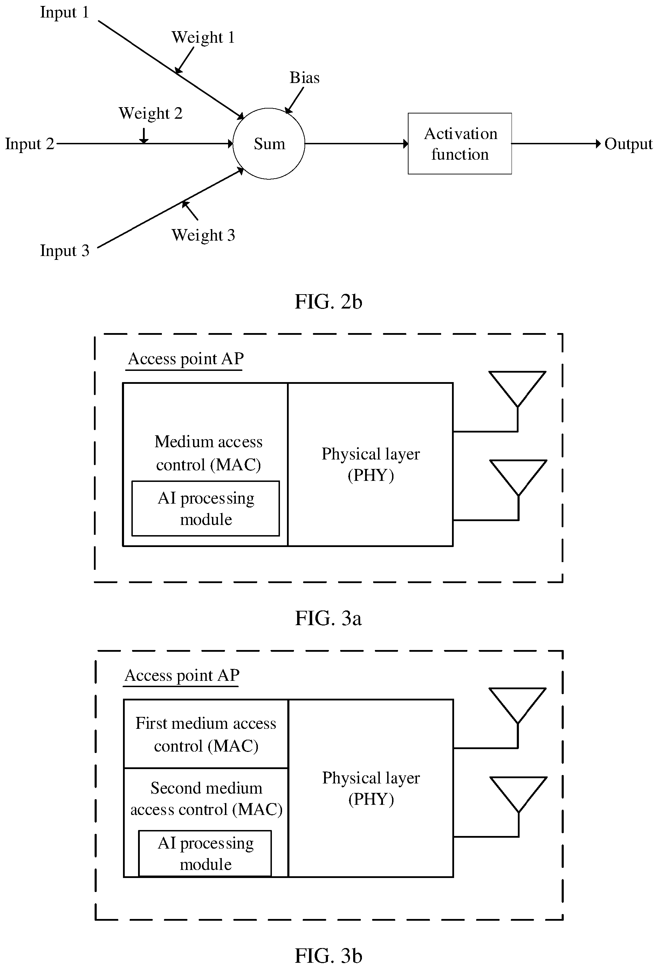

It may be learned from FIG. 2a that each neuron may have a plurality of input connection lines, and each neuron calculates an output based on an input. FIG. 2b is a diagram of a neuron calculating an output based on inputs. For example, FIG. 2b is used as an example. One neuron (for example, a neuron at the output layer) includes three inputs, one output, and two computing functions. In this case, a calculation formula for an output may meet the following condition:

Output = Activation function (Input 1 * Weight 1 + Input 2 * Weight 2 + Input 3 * Weight 3 + Bias)

The symbol "*" represents a mathematical operation "multiply" or "multiplied by". Details are not described in the following.

It may be understood that the input layer has only output connection lines, each neuron at the input layer is a value input into the neural network, and an output value of each neuron is directly used as an input of all output connection lines. The output layer has only input connection lines. The foregoing formula may be used to calculate the output. Optionally, the output layer may not have an activation function. That is, the foregoing formula may be converted into: Output = Input 1 * Weight 1 + Input 2 * Weight 2 + Input 3 * Weight 3 + Bias.

For example, an output of a k-layer neural network may meet the following condition:

$$y = f_k (f_{k-1} (\ldots (f_1 (w_1 * x + b_1))))$$

x represents an input of the neural network, y represents an output of the neural network, $w_i$ represents a weight of an $i^{th}$-layer neural network, $b_i$ represents a bias of the $i^{th}$-layer neural network, and $f_i$ represents an activation function for the $i^{th}$-layer neural network. i = 1, 2, ..., k.

2. Input indication information

The input indication information may indicate at least one of the following: input information of the neural network, a quantity of pieces of the input information, and a dimension of the input information.

For example, the input information may include basic observation (basic observation) information and derived observation (also referred to as extended observation (extended observation)) information. The basic observation information is information that can be directly obtained by a communication apparatus, for example, a carrier sense result, a received power, an MCS used by a data packet, a quantity of MIMO data streams, a channel bandwidth, a queuing delay, an access delay, a channel access behavior, a data packet transmission result, channel information, a channel aggregation status, duration of a carrier sense result, or duration of channel aggregation. The carrier sense result may be busy (busy) or idle (idle) for a channel. For example, carrier sensing may be performed in a unit of a sub-channel. Therefore, the carrier sense result may be understood as busy or idle for each sub-channel. The queuing delay may be a time interval from a time when a data packet enters a sending queue to a time when the data packet is sent. The access delay may be a time interval from a time when a data packet is sent to a time when the data packet is successfully sent. The channel access behavior may mean two behaviors: access and non-access. The data packet transmission result includes a transmission success and a transmission failure. The channel information may be channel state information (Channel State Information, CSI), or may be a signal-to-noise ratio (Signal to Noise Ratio, SNR). The channel aggregation status may be at least one of channels on which channel aggregation is performed or a quantity of the channels on which channel aggregation is performed, or may be whether each sub-channel is aggregated. The derived observation information is information obtained by the communication apparatus through calculation based on the basic observation information, for example, a packet loss rate, a throughput, a time from a current moment to last successful transmission of the communication apparatus, a time from a current moment to last successful transmission of another communication apparatus on a channel, load information of the communication apparatus, or load information of the another communication apparatus on the channel. The another communication apparatus is a communication apparatus other than the communication apparatus.

For example, when functions implemented by the neural network are different, the input information may also be different. The following uses examples for description.

Example 1: When the neural network is used to implement or support an AI-assisted rate adaptation function (or may be understood as when the neural network corresponds to the AI-assisted rate adaptation function), or when the neural network is used to implement or support an AI-assisted rate adaptation joint channel access function (or when the neural network corresponds to the AI-assisted rate adaptation joint channel access function), the input information of the neural network includes but is not limited to one or more of the following: a carrier sense result, a received power, an MCS used by a data packet, a quantity of MIMO data streams, a channel bandwidth, a queuing delay, an access delay, a data packet transmission result, and channel information. The AI-assisted rate adaptation function is implemented by using the neural network, so that the communication apparatus can learn of any one or more of the following information: which MCS is used for transmission, how many MIMO data streams are used for transmission, how large channel bandwidth is used for transmission, or the like. The AI-assisted rate adaptation joint channel access function is implemented by using the neural network, so that the communication apparatus can learn of any one or more of the following information: non-access, which MCS is used for access, how many MIMO data streams are used for transmission, or how large channel bandwidth is used for transmission.

Example 2: When the neural network is used to implement or support an AI-assisted channel access function (or may be understood as when the neural network corresponds to the AI-assisted channel access function), the input information of the neural network includes but is not limited to one or more of the following: a carrier sense result, a queuing delay, an access delay, a channel access behavior, and a data packet transmission result. The queuing delay and the access delay described in this application may be used to reflect a service busyness degree of the communication apparatus and/or a congestion degree of a channel.

It may be understood that, in the foregoing Example 1 and Example 2, the input information of the neural network may further include but is not limited to one or more of the following: a packet loss rate, a throughput, a time from a current moment to last successful transmission of the communication apparatus, and a time from a current moment to last successful transmission of another communication apparatus on a channel. The AI-assisted channel access function is implemented by using the neural network, so that the communication apparatus may determine, through AI, whether to perform access currently.

Example 3: When the neural network is used to implement or support an AI-assisted spatial multiplexing function (or may be understood as when the neural network corresponds to the AI-assisted spatial multiplexing function), the input information of the neural network includes but is not limited to one or more of the following: a packet error rate (packet error rate, PER), a throughput, and load information of the communication apparatus. The AI-assisted spatial multiplexing function is implemented by using the neural network, so that the communication apparatus can dynamically adjust an interference threshold through AI, thereby increasing a concurrency opportunity, improving a throughput, and reducing a delay.

Example 4: When the neural network is used to implement or support an AI-assisted channel aggregation function (or may be understood as when the neural network corresponds to the AI-assisted channel aggregation function), or when the neural network is used to implement or support an AI-assisted channel aggregation joint channel access function (or when the neural network corresponds to the AI-assisted channel aggregation joint channel access function), the input information of the neural network includes but is not limited to one or more of the following: a carrier sense result, a channel aggregation status, a data packet transmission result, duration of a carrier sense result, duration of channel aggregation, or a received power. Optionally, the input information of the neural network may further include but is not limited to one or more of the following: a packet loss rate, a time from a current moment to last successful transmission of the communication apparatus, a time from a current moment to last successful transmission of another communication apparatus on a channel, load information of the communication apparatus, or load information of the another communication apparatus on the channel. The AI-assisted channel aggregation function is implemented by using the neural network, so that the communication apparatus can learn of one or more of the following information: whether channel aggregation is performed, which channels are aggregated, or how many channels are aggregated. The AI-assisted channel aggregation joint channel access function is implemented by using the neural network, so that the communication apparatus can learn of one or more of the following information: whether channel aggregation is performed and whether access is performed, which channels are aggregated and whether access is performed, or how many channels are aggregated and whether access is performed.

It should be noted that, for different functions, the input information may be different; or even for a same function, when required decision results are different, input information for the same function may be different. For example, for a same function, a required decision result may be directly proportional to a type of the input information. For example, more required decision results indicate more input information. In other words, a type of the input information needs to be determined based on a function to be implemented by the neural network and/or a decision result of the neural network.

It may be understood that the input information corresponding to different functions described in Example 1 to Example 4 is merely an example, and should not be construed as a limitation on embodiments of this application. During specific implementation, the input information of the neural network may be determined based on a function to be implemented by the neural network and/or a decision result, which are not enumerated one by one in this application.

The quantity of pieces of the input information may be understood as a quantity of pieces of the input information of the neural network, or a quantity or a length of the input information of the neural network within predetermined duration. Alternatively, the quantity of pieces of the input information may be understood as a historical quantity of pieces of the input information included in the neural network, a total length of the input information, or a length of each type of the input information. For example, the input information includes a carrier sense result and a received power, and a quantity of pieces of the input information is T. In this case, a total of T carrier sense results and T received powers are required for an input of the neural network. For another example, the input information includes a carrier sense result and a received power, and quantities of the input information are T1 and T2 respectively. In this case, T1 carrier sense results and T2 received powers are required for an input of the neural network. For another example, the input information includes a carrier sense result and a received power, and a quantity of pieces of the input information indicates a total quantity of pieces of the input information and is T. In this case, [T/2] carrier sense results and [T/2] received powers are required for an input of the neural network, and a symbol "[T/2]" herein indicates that a rounding operation is performed on T/2.

The dimension of the input information may be used to determine a quantity of neurons corresponding to the input information. For example, when dimensions of all types of input information are the same, a quantity of neurons at the input layer = the dimension of the input information * the total quantity of pieces of the input information. For example, the input information includes a carrier sense result and a received power, and quantities of pieces of the input information are T1 and T2 respectively. That is, T1 carrier sense results and T2 received powers are required for an input of the neural network. In addition, dimensions of the input information are the same, for example, 2. In this case, a quantity of neurons at the input layer = T1 * 2 + T2 * 2. For example, a quantity of neurons at the input layer = a quantity of pieces of input information 1 * a dimension of the input information 1 + a quantity of input information 2 * a dimension of the input information 2 + a quantity of input information 3 * a dimension of the input information 3 + .... It may be understood that the input information 1, the input information 2, and the input information 3 described above are merely examples, and an ellipsis indicates omission of quantities and dimensions of more types of input information input by the neural network for a specific function.

It should be noted that the input information, the quantity of pieces of the input information, and the dimension of the input information in this application may be included in same input indication information, or may be included in different input indication information. This is not limited in this embodiment of this application.

3. Output indication information

The output indication information may indicate at least one of the following in the structure of the output layer of the neural network: a quantity of neurons and an activation function. For example, the activation function may include any one or more of the following: no activation function (for example, represented by None) None, a rectified linear unit (rectified linear unit, ReLU), a sigmoid function (Sigmoid), and a softmax function (Softmax). For example, each activation function may correspond to one index. Therefore, the output indication information may indicate the activation function in a form of an index. For another example, the output indication information may indicate the activation function in a form of a bitmap, and the like, which are not enumerated one by one herein.

4. Function indication information

The function indication information indicates a function to be implemented (supported or enabled) by the neural network. For example, the function indication information may indicate any one or more of the following: AI-assisted channel access, AI-assisted channel aggregation, an AI-assisted channel aggregation joint channel access function, AI-assisted rate adaptation, AI-assisted rate adaptation joint channel access, AI-assisted RU allocation, AI-assisted spatial multiplexing, AI-assisted frame aggregation, AI-assisted beam management, and AI-assisted multi-link transmission.

5. Parameter indication information

The parameter indication information indicates a parameter of the neural network, for example, a bias and/or a weight. The parameter indication information indicates at least one of the following information: a bias of a neuron in the structure of the hidden layer, a weight of the neuron in the structure of the hidden layer, a bias of a neuron in the structure of the output layer, and a weight of the neuron in the structure of the output layer.

It may be understood that the parameter of the neural network indicated by the parameter indication information may correspond to a function indicated by the function indication information. For example, when training the neural network, the AP may separately perform training based on different functions, to obtain parameters of the neural network corresponding to the different functions.

The following describes in detail an architecture of a communication apparatus in this application and a MAC layer of the communication apparatus.

The MAC layer is a main function part of the 802.11 standard. An upper-layer application invokes a function of the MAC layer by invoking an interface primitive provided by the MAC layer. For example, the MAC layer may provide two types of interface primitives to an upper layer, for example, a data part and a management part. The data part provides an interface for transmitting and receiving a common data packet. The management part is used for a management function, such as channel management, connection management, QoS management, and function control management. For example, the function of the MAC layer may include but is not limited to a rate adaptation function, a channel access function, a channel aggregation function, an RU allocation function, a spatial multiplexing function, a frame aggregation function, a beam management function, or a multi-link transmission function. The function of the MAC layer described herein may be understood as a management function provided by the MAC layer for the communication apparatus to implement the foregoing function.

For example, FIG. 3a is a diagram of a structure of an access point according to an embodiment of this application. The AP may be a multi-antenna AP or may be a single-antenna AP. As shown in FIG. 3a, the AP includes a physical layer (physical layer, PHY) and a medium access control (medium access control, MAC) layer. The physical layer may be used to process a physical layer signal, and the MAC layer may be used to process a MAC layer signal. In this embodiment of this application, a function of the MAC layer in the AP may be enhanced. For example, the MAC layer includes an AI processing function. That is, the function of the MAC layer is enhanced, so that the MAC layer may further implement an AI-related function or a neural network-related function. The AI processing function may be implemented by using an AI processing module (as shown in FIG. 3a) at the MAC layer. Alternatively, the AI processing function may be implemented by using an AI processing module (not shown in the figure) located outside the MAC layer. The AI processing module may be configured to train a neural network and/or perform inferring and decision-making by using the trained neural network, to implement various AI-assisted functions, for example, one or more of an AI-assisted rate adaptation function, an AI-assisted rate adaptation joint channel access function, an AI-assisted channel access function, AI-assisted channel aggregation, an AI-assisted channel aggregation joint channel access function, AI-assisted RU allocation, AI-assisted spatial multiplexing, AI-assisted frame aggregation, AI-assisted beam management, and AI-assisted multi-link transmission.

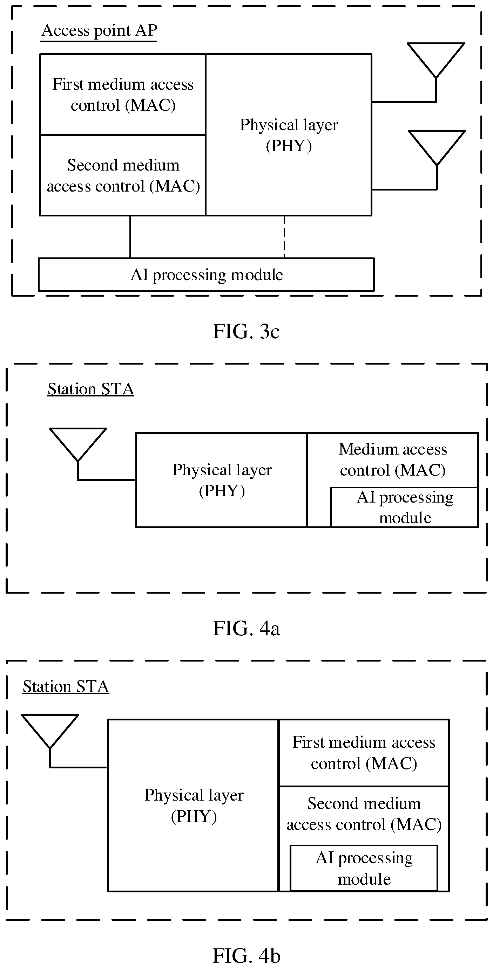

For example, at least one MAC layer may be added to the AP. For example, two MAC layers, such as a first MAC layer and a second MAC layer, are included. The first MAC layer may be configured to process a signal of the first MAC layer. For example, the first MAC layer may be configured to implement an original function of the MAC layer, such as association authentication, power control, channel measurement, multiple access, rate adaptation, channel access, channel aggregation, and RU allocation, which are not enumerated one by one herein. The second MAC layer may be configured to process an AI-related function or a neural network-related function. For example, FIG. 3b is a diagram of a structure of another access point according to an embodiment of this application. Different from the AP shown in FIG. 3a, the second MAC layer shown in FIG. 3b may include an AI processing module. For another example, FIG. 3c is a diagram of a structure of still another access point according to an embodiment of this application. Different from FIG. 3b, an AI processing module shown in FIG. 3c may be located outside the second MAC layer. It may be understood that a dashed line between a physical layer and the AI processing module shown in FIG. 3c indicates that the AI processing module may process a function to be implemented by the physical layer, or the AI processing module may not process a function to be implemented by the physical layer. For descriptions of the AI processing module, refer to the descriptions in FIG. 3a.

Details are not described herein again. For example, the first MAC layer may support a function of an AP of an earlier version, and the second MAC layer may support a function of an AP of a new version. For example, when the AP finds that performance of the AP in a communication process is relatively poor, for example, a packet loss rate is greater than a preset threshold, or a throughput is less than a corresponding threshold, the AP may implement a related function by using the second MAC layer, for example, AI-assisted channel access, AI-assisted rate adaptation, and AI-assisted channel aggregation, which are not enumerated one by one herein. It may be understood that a trigger condition for using the first MAC layer or the second MAC layer by the AP is not limited in this embodiment of this application.

It may be understood that the second MAC layer may also be referred to as an AI-MAC layer or the like. A name of the second MAC layer is not limited in this application.

For example, FIG. 4a is a diagram of a structure of a station according to an embodiment of this application. The STA may be a single-antenna device, or may be a multi-antenna device, and may be a device with more than two antennas. The STA may include a PHY layer and a MAC layer. The physical layer may be configured to process a physical layer signal, and the MAC layer may be configured to process a MAC layer signal. In this embodiment of this application, a function of the MAC layer in the STA may be enhanced. For example, the MAC layer includes an AI processing function. That is, the function of the MAC layer is enhanced, so that the MAC layer may further implement an AI-related function or a neural network-related function. The AI processing function may be implemented by using an AI processing module (as shown in FIG. 4a) at the MAC layer. Alternatively, the AI processing function may be implemented by using an AI processing module (not shown in the figure) located outside the MAC layer. For example, the AI processing module may be configured to train a neural network (a powerful STA, for example, a STA whose algorithm is greater than a specific threshold, may train a neural network) and/or perform inferring and decision-making by using the trained neural network, to implement various AI-assisted functions, for example, one or more of an AI-assisted rate adaptation function, an AI-assisted rate adaptation joint channel access function, an AI-assisted channel access function, AI-assisted channel aggregation, an AI-assisted channel aggregation joint channel access function, AI-assisted RU allocation, AI-assisted spatial multiplexing, AI-assisted frame aggregation, AI-assisted beam management, and AI-assisted multi-link transmission.

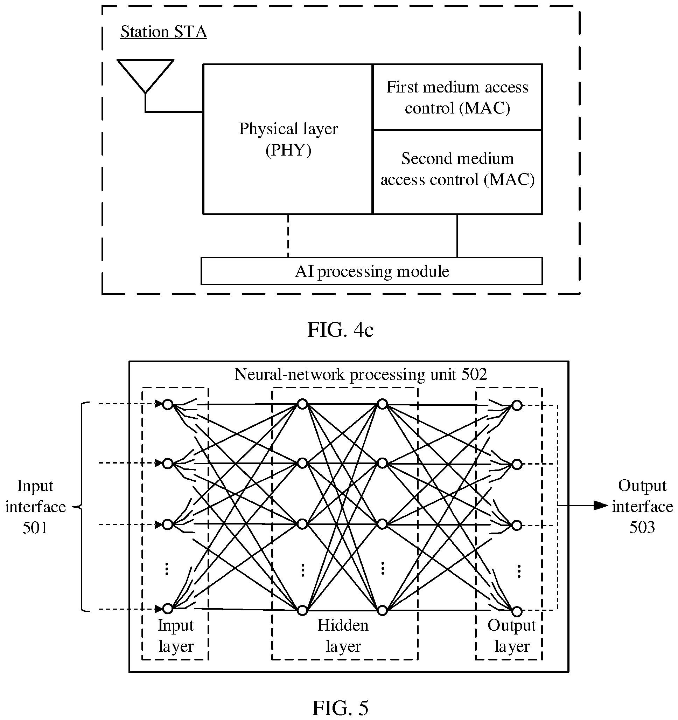

For example, at least one MAC layer may be added to the STA. For example, two MAC layer layers such as a first MAC layer and a second MAC layer are included. For example, FIG. 4b is a diagram of a structure of another station according to an embodiment of this application. Different from the STA shown in FIG. 4a, the second MAC layer shown in FIG. 4b may include an AI processing module. For another example, FIG. 4c is a diagram of a structure of still another station according to an embodiment of this application. Different from FIG. 4b, an AI processing module shown in FIG. 4c may be located outside the second MAC layer. It may be understood that, for descriptions of FIG. 4b and FIG. 4c, refer to descriptions of FIG. 3b and FIG. 3c. Details are not described herein again.

It may be understood that the AI processing module described above may alternatively be referred to as an AI processing circuit, a neural network-based processing circuit, a neural-network processing circuit, a neural-network processing unit, an AI processing chip, or the like. A specific name of the AI processing module is not limited in this embodiment of this application.

It may be understood that the 802.11 standard focuses on PHY and MAC parts. Therefore, other parts included in the AP and the STA are not described in detail in this embodiment of this application. For example, the AP and the STA may further include at least one of a memory, a scheduler, a controller, a processor, or a radio frequency circuit.

The communication apparatus described below focuses on the MAC layer. For other descriptions of the communication apparatus, refer to FIG. 3a to FIG. 3c, FIG. 4a to FIG. 4c, and the like. Optionally, the communication apparatus described below may include an AP, a STA, and/or the like. Optionally, the communication apparatus may be further understood as the AI processing module shown in FIG. 3a to FIG. 3c, or the AI processing module shown in FIG. 4a to FIG. 4c. Therefore, a product form of the communication apparatus shown in FIG. 5 is not limited in this embodiment of this application.

FIG. 5 is a diagram of a structure of a communication apparatus according to an embodiment of this application. As shown in FIG. 5, the communication apparatus includes:

an input interface 501, a neural-network processing unit 502, and an output interface 503, where the neural-network processing unit 502 stores a neural network, and the neural network includes an input layer and an output layer. Optionally, the input interface 501 and the output interface 503 may be understood as communication interfaces, pins, or the like. Optionally, the input interface 501 and the output interface 503 may be understood as transceivers or the like. The neural-network processing unit 502 may be understood as a neural-network processing circuit, a neural-network processing chip, a neural-network chip system, or the like.

The input interface 501 is configured to obtain at least one of input indication information, function indication information, output indication information, or parameter indication information. For descriptions of the input indication information, the function indication information, the output indication information, and the parameter indication information, refer to descriptions of the foregoing related terms. Details are not described herein again.

The neural-network processing unit 502 is configured to perform, based on the input layer and the output layer, a function indicated by the function indication information.

The output interface 503 is configured to output a result obtained after the neural-network processing unit performs a function.

It may be understood that a function performed by the neural-network processing unit 502 may be understood as a function that can be implemented by the MAC layer, for example, may be the function implemented by the enhanced MAC layer shown in FIG. 3a and FIG. 4a, or may be the function implemented by the second MAC layer shown in FIG. 3b, FIG. 3c, FIG. 4b, and FIG. 4c. Functions that can be implemented by the neural-network processing unit are not described in detail herein.

According to the communication apparatus provided in this embodiment of this application, a function implemented by the MAC layer can be implemented based on the neural network. For example, when the function performed by the MAC layer changes, the input layer and the output layer of the neural network are adjusted accordingly, so that different functions can be implemented based on the neural network. In other words, different functions can be implemented by adjusting the input layer and the output layer of the neural network, which can effectively simplify complexity of the neural network and facilitate hardware acceleration.

In the communication apparatus shown in FIG. 5, the input interface may be configured to obtain at least one of the input indication information, the function indication information, the output indication information, or the parameter indication information in the following several implementations.

Implementation 1

An input interface is configured to obtain the input indication information, the function indication information, the output indication information, and the parameter indication information. Optionally, the input interface may simultaneously obtain the input indication information, the function indication information, the output indication information, and the parameter indication information (for example, the foregoing information is included in a same message). Optionally, the input interface may first obtain the function indication information and the input indication information (for example, the function indication information and the input indication information are included in one message), and then obtain the output indication information and the parameter indication information (for example, the output indication information and the parameter indication information are included in another message). Optionally, the input interface may sequentially obtain the function indication information, the input indication information, the output indication information, and the parameter indication information (for example, the foregoing different information is respectively included in different messages). Optionally, the input interface may sequentially obtain the function indication information, the parameter indication information, the input indication information, the parameter indication information, and the like, which are not enumerated one by one herein. In other words, when the input interface needs to obtain all the foregoing information, a sequence in which the input interface obtains the foregoing information is not limited in this embodiment of this application.

Implementation 2

The input interface is configured to obtain the function indication information and the parameter indication information. That is, when the function indicated by the function indication information is determined, the input indication information and the output indication information that correspond to the function indication information may be determined based on the function. For example, when the function to be implemented by the neural network is determined based on the function indication information, input information, an input-layer structure, and an output-layer structure that correspond to the function may be determined based on the function indication information. In other words, input information, an input-layer structure, and an output-layer structure that correspond to each function may be determined by the AP, may be defined by a protocol, or the like. It may alternatively be understood that input information, a quantity of pieces of the input information, a dimension of the input information, and an output-layer structure that correspond to each function may be determined by the AP, may be defined by a protocol, or the like. For example, when the communication apparatus shown in FIG. 5 is a STA, input information, an input-layer structure, and an output-layer structure that correspond to each function may be sent by the AP to the STA through broadcast. For another example, when the communication apparatus shown in FIG. 5 is an AP, input information, an input-layer structure, and an output-layer structure that correspond to each function may be determined by the AP, may be determined by a PAN coordinator, or the like. This is not limited in this embodiment of this application.

Implementation 3

The input interface is configured to obtain the function indication information. That is, when the function indicated by the function indication information is determined, the input indication information, the output indication information, and the parameter indication information that correspond to the function indication information may be determined based on the function. For example, when the function to be implemented by the neural network is determined based on the function indication information, input information, an input-layer structure, an output-layer structure, and a weight and a bias of the neural network that correspond to the function may be broadcast by the AP, may be defined by a protocol, or the like. For descriptions of this implementation, refer to the foregoing Implementation 2. Details are not described herein again.

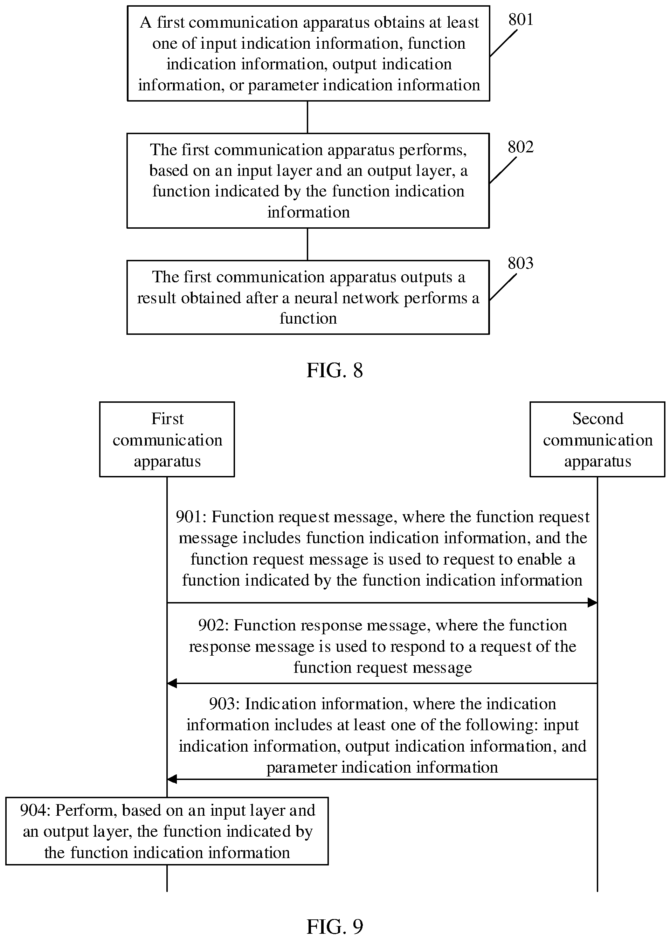

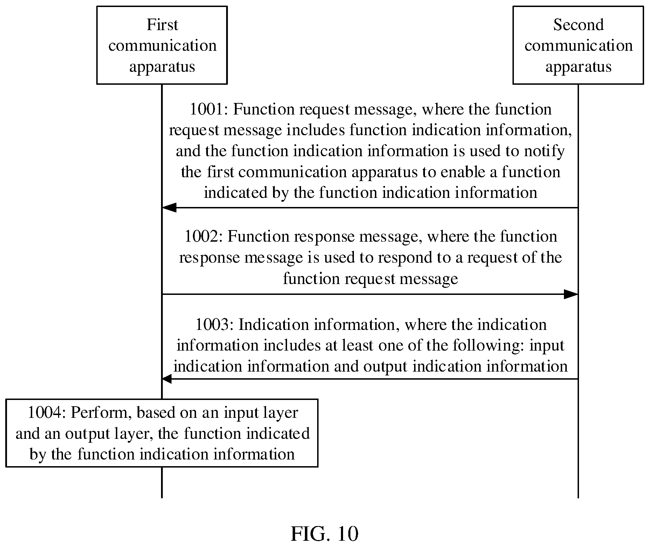

It may be understood that the foregoing three implementations are merely examples. For example, the input interface is configured to obtain the function indication information, the input indication information, and the parameter indication information; or is configured to obtain the function indication information, the output indication information, and the parameter indication information; or is configured to obtain the function indication information, the input indication information, and the output indication information; or the like, which are not enumerated one by one herein. For descriptions of the input interface obtaining the function indication information, the input indication information, the output indication information, and the parameter indication information, refer to the following descriptions about FIG. 9 and FIG. 10.

In the communication apparatus shown in FIG. 5, the neural-network processing unit determines the input-layer structure and the output-layer structure of the neural network based on information input by the input interface, to perform, based on the input layer and the output layer, the function indicated by the function indication information, and obtain a result after performing the function.

For example, a method for determining the input-layer structure of the neural network may be as follows.

Optionally, the structure of the input layer may be determined based on the function indication information. For example, each function may correspond to a type of input-layer structure. Optionally, the structure of the input layer may be determined based on the input indication information. For example, when the quantity of pieces of the input information and/or the dimension of the input information are/is determined in advance (broadcast by the AP or defined by a protocol), the structure of the input layer is determined based on input information indicated by the input indication information. For another example, when the dimension of the input information is determined in advance (broadcast by the AP or defined by a protocol), the structure of the input layer may be determined based on the input information indicated by the input indication information and the quantity of pieces of the input information. For another example, the structure of the input layer is determined based on the input information indicated by the input indication information, the quantity of pieces of the input information, and the dimension of the input information. Optionally, the structure of the input layer may be determined based on the function indication information and the input indication information.

For example, a method for determining the output-layer structure of the neural network may be as follows.

Optionally, a structure of the output layer may be determined based on the function indication information. For example, each function corresponds to a type of output-layer structure. Optionally, the structure of the output layer may be determined based on the output indication information. Optionally, the structure of the output layer may be determined based on the function indication information and the output indication information.

For example, a result output by the neural-network processing unit may be described as follows.

For example, the result obtained after the neural-network processing unit performs a function may be a decision result determined based on at least one of the function indication information and the output indication information. The decision result includes outputting, in a form of a maximum value, a result obtained after the neural-network processing unit performs the function, or outputting, in a probabilistic random selection manner, a result obtained after the neural-network processing unit performs the function. In other words, the decision result may select a result corresponding to an output maximum value, or randomly select a result based on an output probability. That is, the neural-network processing unit may select a result from output results of the neural network as the decision result, and specific content of the decision result corresponds to the function indicated by the function indication information. Optionally, the decision result may be determined based on the function indicated by the function indication information. Optionally, the decision result may be determined based on the output indication information. For example, the output indication information may indicate the output-layer structure of the neural network and the decision result. For example, it is assumed that the neural network corresponds to an AI-assisted rate adaptation function, and it is assumed that there are four output neurons of the neural network, each neuron corresponds to a rate adaptation result, and an output of the four neurons is probability distribution. An output value $p\_i$ of each neuron meets $p\_1 + p\_2 + p\_3 + p\_4 = 1$, and two manners of selecting the decision result may include selecting a rate adaptation result corresponding to a maximum $p\_i$ value, or randomly selecting a rate adaptation result based on distribution of $p\_1$, $p\_2$, $p\_3$ and $p\_4$. Certainly, the foregoing decision result may alternatively be determined by the communication apparatus independently, or the like. This is not limited in this embodiment of this application.

In a possible implementation, the neural network further includes a hidden layer. For example, a structure of the hidden layer may be fixed. For example, structures of hidden layers corresponding to different functions may be broadcast by the AP or defined in a protocol. For another example, indication information of the structures of the hidden layers corresponding to the different functions may be included in the function indication information (or the input indication information, the parameter indication information, or the like). For another example, the indication information of the structures of the hidden layers corresponding to the different functions may be indicated by the AP to the STA based on other information (for example, information other than the function indication information, the input indication information, the output indication information, and the parameter indication information). For example, the structure of the hidden layer includes two structures, and the communication apparatus may select one structure from the two structures based on the function indication information. For another example, the structure of the hidden layer may include three structures, and the communication apparatus may select one structure from the three structures based on the function indication information. For example, the structure of the hidden layer may be the same for different functions. For example, the input-layer structure and the output-layer structure of the neural network may vary with different functions, but the hidden-layer structure may be the same.

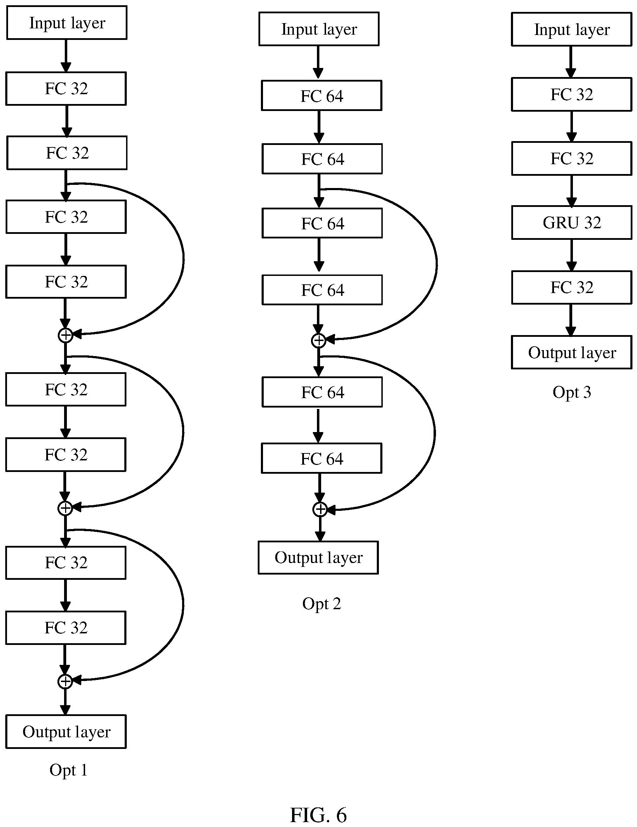

FIG. 6 is a diagram of a structure of a hidden layer of a neural network according to an embodiment of this application. As shown in FIG. 6, a fully connected layer (fully connected layer, FC) (which may also be referred to as a fully connected network) with a residual structure is used in first two hidden-layer structures. For example, a hidden-layer structure 1 (an opt 1 shown in FIG. 6) uses an eight-layer fully-connected network, including three skip connections (skip connections). Each layer has 32 neurons, and an activation function for each neuron is ReLU. A hidden-layer structure 2 (an opt 2 shown in FIG. 6) uses a six-layer fully-connected network, including two skip connections (skip connections). Each layer has 64 neurons, and an activation function for each neuron is ReLU. A hidden-layer structure 3 (an opt 3 shown in FIG. 6) uses a recurrent neural network. An input first passes through a two-layer fully-connected network, then passes through a one-layer gated recurrent unit (gated recurrent unit, GRU), and then passes through a one-layer fully-connected network to connect to the output layer. Each layer has 32 neurons, and an activation function for the fully-connected layer is ReLU. It should be noted that the GRU layer in the hidden-layer structure 3 may alternatively be another recurrent neural network (recurrent neural network, RNN), for example, a long short-term memory (long short-term memory, LSTM) network or a bidirectional LSTM (bidirectional LSTM).

The three hidden-layer structures provided in this embodiment of this application have low complexity. Inference calculation complexity of the hidden-layer structure 1 and the hidden-layer structure 2 is less than a 512-point complex fast Fourier transform (fast Fourier transform, FFT). The hidden-layer structure 3 uses a GRU structure, so that information can be better extracted from historical observation, thereby improving prediction accuracy. In addition, regardless of a function to be performed by the neural network, the foregoing hidden-layer structures may be used. Such a low-complexity neural-network core structure with unified features facilitates hardware acceleration.

According to the communication apparatus provided in this embodiment of this application, an AI-assisted function can be implemented based on the neural network, and the input-layer structure and the output-layer structure of different functions may be adjusted based on information obtained by the input interface, thereby effectively simplifying complexity of the neural network. In addition, the hidden-layer structure of the neural network may be any hidden-layer structure shown in FIG. 6. By using the hidden-layer structure shown in FIG. 6, for different functions, performance is relatively good (for example, algorithm performance is relatively good, or a throughput is relatively large, or a delay is relatively low). This not only facilitates hardware acceleration, but also has good scalability.

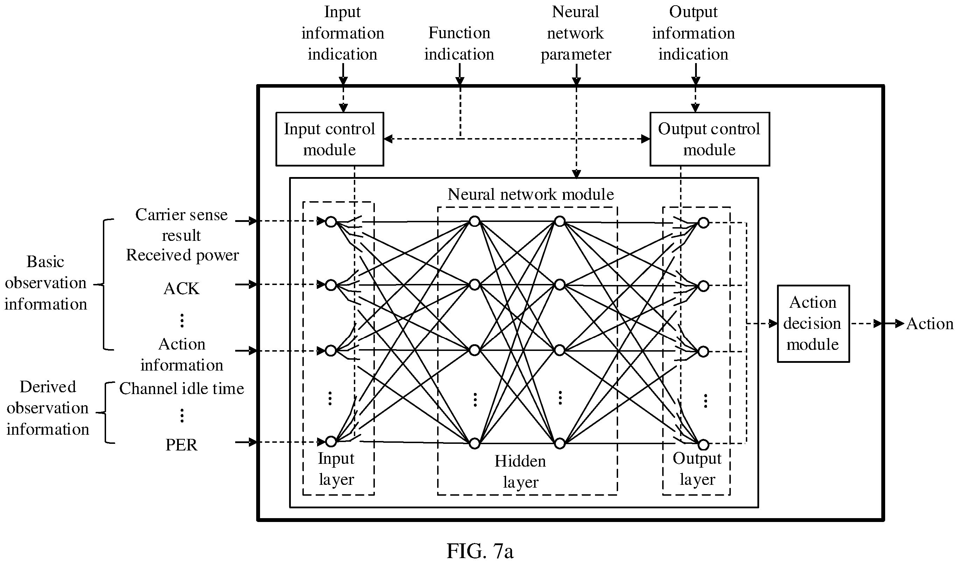

The foregoing structure of the communication apparatus is merely an example. The following describes the communication apparatus provided in this application in a module division manner. FIG. 7a is a diagram of a structure of another communication apparatus according to an embodiment of this application. As shown in FIG. 7a, the communication apparatus includes:

an input control module, a neural network module, an output control module, and an action decision module. The neural network module includes an input layer, a hidden layer, and an output layer. For a hidden-layer structure, refer to the three structures shown in FIG. 6. For a manner of determining an input-layer structure and an output-layer structure, refer to the descriptions shown in FIG. 5. Details are not described herein again.

For example, the input control module is configured to determine a structure of an input layer of a neural network based on input indication information and/or function indication information. The output control module is configured to determine a structure of an output layer of the neural network based on output indication information and/or function indication information. The neural network module may perform, based on the input layer, the hidden layer, and the output layer, a function indicated by the function indication information. The action decision module may select an action based on output information of the neural network, for example, select an action corresponding to an output maximum value, or randomly select an action based on an output probability.

For example, the input control module, the neural network module, the output control module, and the action decision module may correspond to the neural-network processing unit shown in FIG. 5. In other words, the input control module, the neural network module, the output control module, and the action decision module may be implemented by using the neural-network processing unit shown in FIG. 5.

It may be understood that for specific descriptions of the communication apparatus shown in FIG. 7a, refer to FIG. 5 and FIG. 6. Details are not described herein again.

It should be noted that the communication apparatuses shown in FIG. 5 and FIG. 6 may be understood as different division manners for a same communication apparatus. The foregoing division manner is an example, and there may be another division manner in actual implementation. As shown in FIG. 6, it may be understood that the communication apparatus is divided into functional modules. In addition to the foregoing functional modules obtained through division, two or more functions may be integrated into one module. The foregoing modules may be implemented in a form of hardware, or may be implemented in a form of a software functional module. During specific implementation, the communication apparatus may further include more components or modules than those shown in FIG. 5 and FIG. 6. This is not limited in this embodiment of this application.

It should be understood that a product in any form with a function of the communication apparatus described in FIG. 5 or FIG. 6 shall fall within the protection scope of embodiments of this application.

To further understand the communication apparatus shown in embodiments of this application, the following uses examples to describe a function implemented by using the neural network.

Example 1

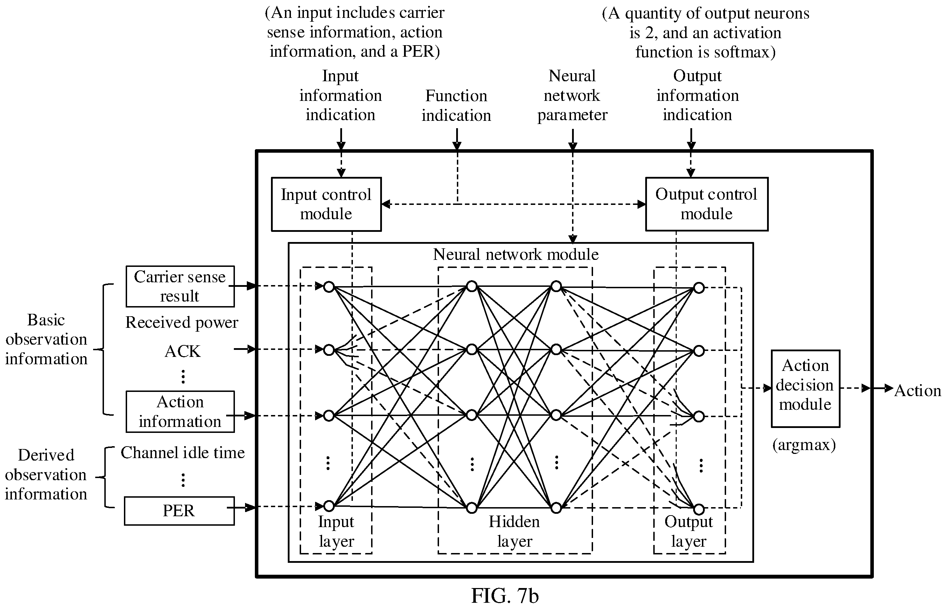

For example, as shown in FIG. 7b, the input information includes a carrier sense result, action information, and a PER, a dimension of the input information is 2, and a quantity of pieces of each type of input information is 1. In this case, a structure of the input layer includes four neurons. A quantity of neurons indicated by the output indication information is 2, an activation function is softmax, and an action decision manner is selecting an action corresponding to a maximum value output by the neural network (argmax shown in FIG. 7b). In this case, it indicates that a structure of the output layer includes two neurons, and a result corresponding to the maximum value output by the neural network is selected as a decision result. The hidden-layer structure may be any structure shown in FIG. 6. The communication apparatus shown in FIG. 7a is used as an example. When the communication apparatus receives the input indication information, the input control module may be in a working state and control a quantity of neurons at the input layer. When the communication apparatus receives the output indication information, the output control module may be in a working module and control a quantity of neurons at the output layer and the activation function, and the action decision module may select the action corresponding to the maximum value output by the neural network.

Example 2

For example, the function indicated by the function indication information is AI-assisted rate adaptation or MCS selection. The input information includes a carrier sense result RSSI and a received power P, and a quantity of pieces of each type of input information is T. That is, the input information may be represented as $(RSSI_t, P_t)$, and a value of t is a positive integer less than or equal to T (that is, 1, 2, 3, 4, ..., T). If each piece of input information corresponds to one neuron (that is, dimensions of the input information are all 1), the input-layer structure of the neural network includes 2T neurons.

The hidden-layer structure of the neural network is a 32*8 residual fully-connected network. That is, the hidden layer includes an eight-layer fully-connected network, including three skip connections. Each layer has 32 neurons, and an activation function for each neuron is ReLU.

It is determined, based on the output indication information and/or the function indication information, that the structure of the output layer includes N neurons, and an activation function for each neuron is a linear (Linear) function. If one output-layer neuron outputs an expected reward of one level of MCS, outputs of the neural network are expected rewards of N levels of MCS (for example, $MCS_0$ to $MCS_{N-1}$). It is assumed that a manner of selecting the decision result is selecting an MCS corresponding to an output-layer maximum value. Therefore, after obtaining the parameter indication information, the communication apparatus may perform, based on the neural network, inferring on the historical T RSSIs and the historical T Ps that are detected by the communication apparatus, and select the MCS corresponding to the output-layer maximum value for transmission.

It may be understood that the input information shown above is merely an example. If the communication apparatus expects more decision results, a type of the input information may include other information. Details are not described herein again.

Currently, most rate adaptation algorithms used in commercial Wi-Fi networks are based on sampling (sampling-based), including the Minstrel algorithm and the Iwl-mvm-rs algorithm. A basic principle is to sample MCSs of each level, collect a statistic on a feature quantity of each MCS, such as a throughput and a packet loss rate, and finally determine an MCS based on statistical feature quantities. However, this method has at least the following disadvantages: 1. A sampling period is long (if the sampling period is too short, a channel condition cannot be reflected), and an obtained statistic cannot reflect a current wireless environment (because the wireless environment changes with time), which leads to poor transmission performance. 2. After the wireless environment changes, it takes a long time for re-sampling to adjust to an appropriate MCS, which results in poor adaptability.

However, in this embodiment of this application, rate adaptation MCS selection is performed through a prediction capability of the neural network, which features strong adaptability, low complexity, and good scalability, and can implement multi-vendor interworking (vendor interworking may be understood as that a structure of the hidden layer is fixed, different vendors may use the hidden layer shown in FIG. 6, and a manner of determining the input-layer structure and the output-layer structure has been negotiated).

Example 3

For another example, the function indicated by the function indication information is AI-assisted channel aggregation. It is assumed that the input information is classified into two types, for example, basic observation information and derived observation information. A quantity of pieces of the basic observation information is T', a quantity of pieces of derived observation information is 1, and a quantity of neurons corresponding to each type of input information is 1 (that is, a dimension of the input information is 1). It is assumed that a quantity of channels corresponding to the input information is M. In this case, the input information of the neural network may be understood as historical T' pieces of basic observation information and historical one piece of derived observation information of the M channels. It is further assumed that at a moment t, basic observation information of the communication apparatus on an $m^{th}$ channel (me{1, ..., M}) is o, a, and I, and derived observation information is $load^0$ and $load^1$. o represents a carrier sense result, a represents a channel aggregation status, I represents duration of one (o, a) pair (that is, a time during which o and a remain unchanged), $load^0$ represents load of the apparatus itself (for example, load of the communication apparatus), and $load^1$ represents load (that is, load information of another communication apparatus on the channel) of another node on the channel (that is, the $m^{th}$ channel). In this case, the input layer of the neural network includes $(3*T'+2*1)*M$ neurons.

The hidden-layer structure of the neural network is a 32*8 residual fully-connected network. That is, the hidden layer includes an eight-layer fully-connected network, including three skip connections. Each layer has 32 neurons, and an activation function for each neuron is ReLU.

It is determined, based on the output indication information and/or the function indication information, that the structure of the output layer includes N neurons, and an activation function for the neuron is a linear function. In this case, outputs of the neural network may be expected rewards of N channel aggregation manners, that is, $Q(Ch_0)$ to $Q(Ch_{N-1})$, where $Ch_n$ represents a channel aggregation manner. It is assumed that a manner of selecting the decision result is selecting a channel aggregation manner corresponding to an output-layer maximum value.

Therefore, after obtaining the parameter indication information, the communication apparatus may perform, based on the neural network, inferring on historical data sets of the M channels detected by the communication apparatus, and select the channel aggregation manner corresponding to the output-layer maximum value for transmission.

The communication apparatus in this embodiment of this application may perform inferring and decision-making by using the neural network, to implement AI-assisted channel aggregation, AI-assisted channel aggregation joint channel access, or AI-assisted channel access, thereby improving performance. Optionally, when the parameter indication information is obtained through training by another communication apparatus, the communication apparatus does not need to train the neural network by itself, and energy consumption of the communication apparatus can be further reduced. In addition, compared with a conventional channel aggregation method (for example, a channel aggregation method in which the neural network is not used), this embodiment of this application further has advantages such as strong adaptability, low complexity, good scalability, and multi-vendor interworking.

Example 4

The function indicated by the function indication information is AI-assisted channel access. That is, AI is used to determine whether the communication apparatus currently performs access. For example, the input information may include an access behavior, a carrier sense result, duration of a carrier sense result, a time from a current moment to last successful transmission of the communication apparatus, and a time from a current moment to last successful transmission of another communication apparatus. It is assumed that each piece of input information corresponds to one neuron, and the input layer of the neural network includes n pieces of historical information (the access behavior, the carrier sense result, and the duration of the carrier sense result), the time from the current moment to the last successful transmission of the communication apparatus, and the time from the current moment to the last successful transmission of the another communication apparatus. Therefore, a quantity of neurons included in the input layer is 3n+2. For example, n = 10 or 20. This is merely an example. The hidden-layer structure may be the opt 1 or the opt 2 shown in FIG. 6.

A quantity of neurons at the output layer of the neural network that is determined based on the function indication information and/or the output indication information is 2, and an activation function is a linear activation function. An output of the neural network may include an expected reward for accessing a channel and an expected reward for not accessing a channel. The decision result may be an action with a maximum expected reward, that is, an action corresponding to an output maximum value.

Example 5

The function indicated by the function indication information is AI-assisted spatial multiplexing. For example, AI may be used to dynamically adjust an interference threshold, thereby increasing a concurrency opportunity, improving a, and reducing a delay. For example, the input information may include a quantity of consecutive packet losses, a throughput, a PER, and load information of the communication apparatus. Assuming that each piece of input information corresponds to one neuron, the input layer of the neural network includes four neurons. The hidden-layer structure may be the opt 3 shown in FIG. 6. It may be understood that because the GRU is a recurrent neural network, for example, prediction is performed based on information of a historical period of time, the four neurons included in the input layer are input dimensions of the GRU at each moment.

A quantity of neurons at the output layer of the neural network that is determined based on the function indication information and/or the output indication information is n, and an activation function is softmax. In this case, an output of the neural network may include probabilities of n interference thresholds. The decision result may be an interference threshold corresponding to an output maximum value. Therefore, if the carrier sense result is greater than the interference threshold, the communication apparatus considers that the channel is busy, and if the carrier sense result is less than the interference threshold, the communication apparatus considers that the channel is idle.

It may be understood that the foregoing five examples are merely examples. The communication apparatus provided in this embodiment of this application may further implement more functions, and the input-layer structure and the output-layer structure that correspond to different functions are different, which are not enumerated one by one herein.

With reference to the communication apparatus described above, the following describes the method provided in embodiments of this application by using a first communication apparatus and a second communication apparatus as examples. It may be understood that, for descriptions of the first communication apparatus and the second communication apparatus, refer to FIG. 5 to FIG. 7a above. Details are not described herein again.

In the communication apparatus described below in this application, the first communication apparatus may be a node (for example, a node that cannot complete neural network training but can perform inferring and decision-making by using a neural network) with a limited resource in a network, for example, a STA in a scenario in which an AP communicates with the STA, an AP (for example, a conventional access point) with a relatively weak capability in a multi-AP collaboration scenario, or a STA (for example, a conventional station) with a relatively weak capability in a D2D communication scenario. Correspondingly, the second communication apparatus may be a node (for example, a node that can complete neural network training and can perform inferring and decision-making by using a neural network) with an unlimited resource or a stronger capability in a network, for example, an AP in a scenario in which the AP communicates with a STA, an AP (for example, an access point supporting a latest 802.11 standard) with a stronger capability in a multi-AP collaboration scenario, or a STA (for example, a station supporting a latest 802.11 standard) with a stronger capability in a D2D communication scenario. The latest 802.11 standard herein may refer to a future Wi-Fi standard, for example, Wi-Fi 8 (that is, a next-generation standard of 802.11be), Wi-Fi 9 (that is, a next-generation standard of Wi-Fi 8), or Wi-Fi 10 (that is, a next-generation standard of Wi-Fi 9). The conventional access point herein may be an access point that supports only a standard before the latest 802.11 standard, and the conventional station may be a station that supports only a standard before the latest 802.11 standard.

Optionally, the communication apparatus in this application includes a module that can perform inferring and decision-making by using a neural network, for example, an AI processing module. For example, an AI processing module in the second communication apparatus may not only perform inferring and decision-making by using the neural network, but also perform neural network training. An AI processing module in the first communication apparatus may perform inferring and decision-making by using the neural network trained by the second communication apparatus. Certainly, in some optional embodiments, the AI processing module in the first communication apparatus may also perform neural network training.

It may be understood that a difference between the first communication apparatus and the second communication apparatus includes but is not limited to: capability strength, whether a resource is limited, or whether a neural network training capability is available.

According to the communication method provided in this embodiment of this application, a resource-limited node (which may be the first communication apparatus in this application) in a network can obtain related information (for example, a function, a structure, a parameter, an input, and an output of the neural network) of a neural network that has been trained by a node (which may be the second communication apparatus in this application) with a more powerful function in the network. This lays a foundation for the resource-limited node to implement AI-assisted rate adaptation, AI-assisted rate adaptation joint channel access, and AI-assisted channel aggregation. Generally, because neural network training requires relatively large computing power and energy consumption, only some nodes (usually nodes with relatively strong capabilities) can complete neural network training and use the neural network. However, other nodes (usually nodes with limited resources) cannot complete neural network training or a cost (for example, extremely high energy consumption) for neural network training is excessively high. As a result, an AI-based rate adaptation algorithm cannot be used to improve performance. However, according to the method provided in this embodiment of this application, (after the first communication apparatus requests to enable an AI-assisted related function, for example, an AI-assisted rate adaptation function, an AI-assisted channel access function, or an AI-assisted rate adaptation joint channel access function), the second communication apparatus may notify the first communication apparatus of related information (for example, a function, a structure, a parameter, input information, and output information of the neural network) of the trained neural network that has been trained by the second communication apparatus. In this way, the first communication apparatus restores, based on the related information, the neural network that has been trained by the second communication apparatus, and performs inferring and decision-making by using data observed by the first communication apparatus and the restored neural network, to obtain a corresponding decision result for transmission, without training the neural network by the first communication apparatus. This not only lays a foundation for the resource-limited node to implement AI-assisted rate adaptation, AI-assisted rate adaptation joint channel access, or the like, but also reduces energy consumption of the first communication apparatus.

FIG. 8 is a schematic flowchart of a communication method according to an embodiment of this application. The method may be applied to the first communication apparatus (for example, a STA or a function-limited AP). The first communication apparatus stores a neural network, and the neural network includes an input layer and an output layer. As shown in FIG. 8, the method includes the following steps.

801: The first communication apparatus obtains at least one of input indication information, function indication information, output indication information, or parameter indication information.

For example, the first communication apparatus may simultaneously obtain the input indication information, the function indication information, the output indication information, and the parameter indication information. Alternatively, for a manner in which the first communication apparatus obtains the foregoing information, refer to step 901 and step 902 shown in FIG. 9.

802: The first communication apparatus performs, based on the input layer and the output layer, a function indicated by the function indication information.

803: The first communication apparatus outputs a result obtained after the neural network performs a function.

It may be understood that for specific descriptions of step 801 to step 803, refer to FIG. 5 to FIG. 7a. Details are not described herein again.

The method shown in FIG. 8 is further described below.

FIG. 9 is a schematic flowchart of another communication method according to an embodiment of this application. As shown in FIG. 9, the method includes the following steps.

901: A first communication apparatus sends a function request message, where the function request message includes function indication information, and the function request message is used to request to enable a function indicated by the function indication information. Correspondingly, a second communication apparatus receives the function request message.

For example, when the first communication apparatus finds that performance of the first communication apparatus in a communication process is relatively poor, for example, a packet loss rate is greater than a preset threshold, or a throughput is lower than a corresponding threshold, a rate change exceeds a corresponding threshold, or a quantity of consecutive transmission failures exceeds a threshold, the first communication apparatus may send the function request message to the second communication apparatus, for example, request to enable AI-assisted rate adaptation or AI-assisted rate adaptation joint channel access. For example, when the first communication apparatus is expected to transmit data of a service (the service is a delay-sensitive service or a service having a relatively high delay requirement), the first communication apparatus may send the function request message to the second communication apparatus, for example, request to enable AI-assisted channel access or AI-assisted spatial multiplexing. A specific AI-assisted function to be enabled may be determined by the first communication apparatus based on a policy of the first communication apparatus. This is not limited in this embodiment of this application.

For example, a function that is requested by the first communication apparatus and that needs to be enabled by the first communication apparatus may exist in the function request message in a form of a field, or may exist in the function request message in a form of a bitmap. This is not limited in this embodiment of this application.

For example, the function indication information exists in the function request message in a form of a field. For example, the function indication information may be located in an AI function request field. For example, when the AI function request field is set to a first value, the AI-assisted rate adaptation function is requested to be enabled; when the AI function request field is set to a second value, the AI-assisted rate adaptation joint channel access function is requested to be enabled; when the AI function request field is set to a third value, AI-assisted channel aggregation is requested to be enabled; when the AI function request field is set to a fourth value, AI-assisted channel aggregation joint channel access is requested to be enabled, and the like, which are not enumerated one by one herein. A length of bits occupied by the AI function request field is not limited in this embodiment of this application. For example, the length of bits occupied by the AI function request field may be determined based on a type of a function that is requested to be enabled by the function request message.

For another example, the function indication information exists in the function request message in a form of a bitmap (bitmap). For example, the bitmap of the function indication information may be referred to as an AI function request bitmap, and one bit in the AI function request bitmap corresponds to one function. When a bit in the AI function request bitmap is set to 1, a function corresponding to the bit is requested to be enabled. Certainly, when a bit in the AI function request bitmap is set to 0, a function corresponding to the bit may be requested to be enabled. It may be understood that a length of the AI function request bitmap may be determined based on the type of the function that is requested to be enabled by the function request message.

902: The second communication apparatus sends a function response message, where the function response message is used to respond to a request of the function request message. Correspondingly, the first communication apparatus receives the function response message.

Optionally, after the second communication apparatus receives the function request message, the second communication apparatus may send the function response message to the first communication apparatus, to respond to (that is, approve or reject) the request of the function request message. The function response message may exist in a form of a field. For example, a length of the function response message is one bit. When the bit is set to 1, it indicates that the request of the function request message is approved; and when the bit is set to 0, it indicates that the request of the function request message is rejected. Alternatively, when the bit is set to 0, it indicates that the request of the function request message is approved; and when the bit is set to 1, it indicates that the request of the function request message is rejected. In this embodiment of this application, whether the function response message is set to 1 or 0 to indicate that the function request message is approved is not limited.

Optionally, when the second communication apparatus approves of the request of the function request message, the second communication apparatus may send a parameter of a neural network to the first communication apparatus. In a possible implementation, the second communication apparatus may include the parameter of the neural network in the function response message. It may be understood that, if the function response message carries the parameter of the neural network (which may be all parameters or some parameters herein), it may indicate that the second communication apparatus approves of the request of the function request message. In this case, additional field or bit (in the function response message) may not be required to indicate that the request of the function request message is approved. Certainly, even if the function response message carries the parameter of the neural network (which may be all parameters or some parameters herein), another field or bit may be used in the function response message to indicate that the request of the function request message is approved. This is not limited in this embodiment of this application.

In another possible implementation, the second communication apparatus may separately send the parameter of the neural network (that is, the parameter of the neural network is not sent through the function response message), as described in step 903 below.

903: The second communication apparatus sends indication information, where the indication information includes at least one of the following: input indication information, output indication information, and parameter indication information. Correspondingly, the first communication apparatus receives the indication information.

Optionally, step 903 may alternatively be: The second communication apparatus sends indication information, where the indication information includes input indication information and/or output indication information. Correspondingly, the first communication apparatus receives the indication information. The second communication apparatus sends the parameter indication information, and correspondingly, the first communication apparatus receives the parameter indication information.

It may be understood that the parameter indication information delivered by the second communication apparatus is a parameter of a neural network corresponding to the function indicated by the function indication information. In other words, the second communication apparatus may deliver, to the first communication apparatus, a parameter of a neural network that has been trained by the second communication apparatus.

Similar to the foregoing step 903, the first communication apparatus and the second communication apparatus may agree on input information and output information of the neural network, and agree on an input-layer structure and an output-layer structure of the neural network.

In an example, a hidden-layer structure of the neural network is one of a plurality of predefined hidden-layer structures (the three hidden layers shown in FIG. 6). Each hidden-layer structure may be represented by using one or more pieces of the following information: a quantity of hidden layers, a quantity of neurons at each layer, an activation function used by a neuron at each layer, and a connection manner between neurons at each layer. The plurality of predefined hidden-layer structures may be specified in a standard protocol, or may be notified by the second communication apparatus to the first communication apparatus in advance. For example, the first communication apparatus and the second communication apparatus exchange the plurality of predefined hidden-layer structures in a connection establishment process (if the first communication apparatus and the second communication apparatus are a STA and an AP respectively, the connection establishment process may refer to an association process). For example, the second communication apparatus may indicate, based on indication information of the hidden-layer structure, which one of the plurality of predefined hidden-layer structures is the hidden-layer structure of the neural network. For example, three hidden-layer structures are predefined, and are respectively identified by an option 1 (opt 1), an option 2 (opt 2), and an option 3 (opt 3). If a hidden layer indicated by the indication information of the hidden-layer structure is the opt 2, it indicates that the hidden-layer structure of the neural network is a hidden-layer structure identified by the opt 2 (that is, one or more of a quantity of hidden layers, a quantity of neurons at each layer, an activation function used by neurons at each layer, and a connection manner between neurons at each layer). It may be understood that, in this embodiment of this application, a plurality of hidden-layer structures are predefined, and the indication information indicates which hidden-layer structure in the plurality of predefined hidden-layer structures is to be used, so that a quantity of bits can be reduced, and signaling overheads can be reduced.

In another example, the hidden-layer structure of the neural network may be broadcast by the AP. For example, a broadcast message may include a correspondence between the function and the hidden-layer structure. The function is bound to the hidden-layer structure, so that when the function indicated by the function indication information is determined, the hidden-layer structure corresponding to the function is also determined, thereby further reducing signaling overheads.

In still another example, hidden-layer structures corresponding to different functions are the same. In other words, different functions implemented by the neural network may correspond to any hidden layer shown in FIG. 6.

904: The first communication apparatus performs, based on an input layer and an output layer, the function indicated by the function indication information.

For descriptions of determining, by the first communication apparatus, a structure of the neural network, refer to the foregoing descriptions. Details are not described herein again.

FIG. 10 is a schematic flowchart of still another communication method according to an embodiment of this application. As shown in FIG. 10, the method includes the following steps.

1001: A second communication apparatus sends a function request message, where the function request message includes function indication information, and the function indication information is used to notify a first communication apparatus to enable a function indicated by the function indication information. Correspondingly, the first communication apparatus receives the function request message.

For example, the function request message is used to request or indicate to enable any one of the following functions: an AI-assisted rate adaptation function, an AI-assisted rate adaptation joint channel access function, AI-assisted channel access, AI-assisted channel aggregation, AI-assisted channel aggregation joint channel access, and the like.

1002: The first communication apparatus sends a function response message, where the function response message is used to respond to a request of the function request message. Correspondingly, the second communication apparatus receives the function response message.

The function response message may be used to approve or reject the request of the function request message.

Optionally, the function request message may further include parameter indication information. In other words, when sending the function indication information, the second communication apparatus may send the parameter indication information to the first communication apparatus.

In this embodiment of this application, a node (for example, an AP or the second communication apparatus) with a relatively strong capability may send the function request message, to request or indicate one or more resource-limited nodes (for example, a STA or the first communication apparatus) to enable an AI-assisted related function. This can not only lay a foundation for the resource-limited node to implement AI-assisted rate adaptation or AI-assisted rate adaptation joint channel access, but also enable AI-assisted related functions of a plurality of resource-limited nodes through one interaction, thereby reducing air interface resources.

Certainly, the function indication information and the parameter indication information may alternatively be located in different messages.

1003: The second communication apparatus sends indication information, where the indication information includes at least one of the following: input indication information and output indication information.

It may be understood that step 1003 is shown by using an example in which the input indication information and the output indication information are included in a same message. The input indication information and the output indication information may be further included in different messages. Details are not described herein again.

1004: The first communication apparatus performs, based on an input layer and an output layer, the function indicated by the function indication information.

For descriptions of determining, by the first communication apparatus, a structure of the neural network, refer to the foregoing descriptions. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments (as shown in FIG. 8 to FIG. 10).

In addition, this application further provides a computer program. The computer program is used to implement operations and/or processing performed by the first communication apparatus in the method provided in this application.

This application further provides a computer program. The computer program is used to implement operations and/or processing performed by the second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the method provided in this application.

This application further provides a computer-readable storage medium. The computer-readable storage medium stores computer code. When the computer code is run on a computer, the computer is enabled to perform operations and/or processing performed by the second communication apparatus in the method provided in this application.

This application further provides a computer program product. The computer program product includes computer code or a computer program. When the computer code or the computer program is run on a computer, operations and/or processing performed by the first communication apparatus in the method provided in this application are/is performed.

This application further provides a computer program product. The computer program product includes computer code or a computer program. When the computer code or the computer program is run on a computer, operations and/or processing performed by the second communication apparatus in the method provided in this application are/is performed.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections by using some interfaces, apparatuses, or units, and may also be connection in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication apparatus, wherein the apparatus comprises:

   an input interface, a neural-network processing unit, and an output interface, wherein the neural-network processing unit stores a neural network, and the neural network comprises an input layer and an output layer;
   the input interface is configured to obtain at least one of input indication information, function indication information, output indication information, or parameter indication information;
   the neural-network processing unit is configured to perform, based on the input layer and the output layer, a function indicated by the function indication information, wherein a structure of the input layer is determined based on at least one of the following information: the input indication information and the function indication information, a structure of the output layer is determined based on at least one of the following information: the output indication information and the function indication information, the output indication information indicates at least one of the following in the structure of the output layer: a quantity of neurons and an activation function, and the parameter indication information indicates at least one of the following information: a bias of a neuron in the neural network and a weight of the neuron in the neural network; and

the output interface is configured to output a result obtained after the neural-network processing unit performs a function.

2. The apparatus according to claim 1, wherein the neural network further comprises a hidden layer, and a structure of the hidden layer is the same for different functions.

3. The apparatus according to claim 1 or 2, wherein the parameter indication information indicates at least one of the following information: a bias of a neuron in the structure of the hidden layer, a weight of the neuron in the structure of the hidden layer, a bias of a neuron in the structure of the output layer, and a weight of the neuron in the structure of the output layer.

4. The apparatus according to any one of claims 1 to 3, wherein the result obtained after the neural-network processing unit performs a function comprises a decision result determined based on at least one of the function indication information and the output indication information, and the decision result comprises outputting, in a form of a maximum value, a result obtained after the neural-network processing unit performs the function, or outputting, in a probabilistic random selection manner, a result obtained after the neural-network processing unit performs the function.

5. The apparatus according to any one of claims 1 to 4, wherein the function indication information indicates any one or more of the following functions:

artificial intelligence AI-assisted channel access, AI-assisted channel aggregation, an AI-assisted channel aggregation joint channel access function, AI-assisted rate adaptation, AI-assisted rate adaptation joint channel access, AI-assisted resource unit RU allocation, AI-assisted spatial multiplexing, AI-assisted frame aggregation, AI-assisted beam management, and AI-assisted multi-link transmission.

6. The apparatus according to any one of claims 1 to 5, wherein the input indication information indicates at least one of the following:

input information of the neural network, a quantity of pieces of the input information, and a dimension of the input information.

7. The apparatus according to claim 6, wherein the quantity of pieces of the input information and the dimension of the input information are used to determine a quantity of neurons at the input layer.

8. The apparatus according to claim 6 or 7, wherein the input information comprises any one or more of the following:

a carrier sense result, a received power, a modulation and coding scheme MCS used by a data packet, a quantity of multiple-input multiple-output MIMO data streams, a channel bandwidth, a queuing delay, an access delay, a channel access behavior, a data packet transmission result, channel information, a channel aggregation status, duration of a carrier sense result, or duration of channel aggregation, wherein

the channel access behavior comprises access or non-access.

9. The apparatus according to claim 8, wherein the input information further comprises any one or more of the following: a packet loss rate, a throughput, a time from a current moment to last successful transmission of the communication apparatus, a time from a current moment to last successful transmission of another communication apparatus on a channel, load information of the communication apparatus, or load information of the another communication apparatus on the channel, wherein the another communication apparatus is a communication apparatus other than the communication apparatus.

10. A communication method, wherein the method is applied to a station STA, the STA stores a neural network, the neural network comprises an input layer and an output layer, and the method comprises:

obtaining at least one of input indication information, function indication information, output indication information, or parameter indication information;

performing, based on the input layer and the output layer, a function indicated by the function indication information, wherein a structure of the input layer is determined based on at least one of the following information: the input indication information and the function indication information, a structure of the output layer is determined based on at least one of the following information: the output indication information and the function indication information, the output indication information indicates at least one of the following in the structure of the output layer: a quantity of neurons and an activation function, and the parameter indication information indicates at least one of the following information: a bias of a neuron in the neural network and a weight of the neuron in the neural network; and

outputting a result obtained after the neural network performs a function.

11. The method according to claim 10, wherein the neural network further comprises a hidden layer, and a structure of the hidden layer is the same for different functions.

12. The method according to claim 10 or 11, wherein the parameter indication information indicates at least one of the following information: a bias of a neuron in the structure of the hidden layer, a weight of the neuron in the structure of the hidden layer, a bias of a neuron in the structure of the output layer, and a weight of the neuron in the structure of the output layer.

13. The method according to any one of claims 10 to 12, wherein the result obtained after the neural network performs a function comprises a decision result determined based on at least one of the function indication information and the output indication information, and the decision result comprises outputting, in a form of a maximum value, a result obtained after the neural-network processing unit performs the function, or outputting, in a probabilistic random selection manner, a result obtained after the neural-network processing unit performs the function.

14. The method according to any one of claims 10 to 13, wherein the function indication information indicates any one or more of the following functions:
artificial intelligence AI-assisted channel access, AI-assisted channel aggregation, an AI-assisted channel aggregation joint channel access function, AI-assisted rate adaptation, AI-assisted rate adaptation joint channel access, AI-assisted resource unit RU allocation, AI-assisted spatial multiplexing, AI-assisted frame aggregation, AI-assisted beam management, and AI-assisted multi-link transmission.

15. The method according to any one of claims 10 to 14, wherein the input indication information indicates at least one of the following:
input information of the neural network, a quantity of pieces of the input information, and a dimension of the input information.

16. The method according to claim 15, wherein the quantity of pieces of the input information and the dimension of the input information are used to determine a quantity of neurons at the input layer.

17. The method according to claim 15 or 16, wherein the input information comprises any one or more of the following:

a carrier sense result, a received power, a modulation and coding scheme MCS used by a data packet, a quantity of multiple-input multiple-output MIMO data streams, a channel bandwidth, a queuing delay, an access delay, a channel access behavior, a data packet transmission result, channel information, a channel aggregation status, duration of a carrier sense result, or duration of channel aggregation, wherein
the channel access behavior comprises access or non-access.

18. The method according to claim 17, wherein the input information further comprises any one or more of the following:
a packet loss rate, a throughput, a time from a current moment to last successful transmission of the communication apparatus, a time from a current moment to last successful transmission of another communication apparatus on a channel, load information of the communication apparatus, or load information of the another communication apparatus on the channel, wherein the another communication apparatus is a communication apparatus other than the communication apparatus.

19. The method according to any one of claims 10 to 18, wherein the obtaining at least one of input indication information, function indication information, output indication information, or parameter indication information comprises:

sending, by the STA, a function request message to an access point AP, wherein the function request message comprises the function indication information, and the function request message is used to request to enable the function indicated by the function indication information;
receiving, by the STA, a function response message from the AP, wherein the function response message is used to confirm the function request message; and

receiving, by the STA, indication information from the AP, wherein the indication information comprises at least one of the following: the input indication information, the output indication information, and the parameter indication information.

20. A computer-readable storage medium, wherein the computer-readable storage medium is configured to store a computer program, and when the computer program is executed, the method according to any one of claims 10 to 19 is performed.

21. A computer program, wherein when the computer program is executed, the method according to any one of claims 10 to 19 is performed.

FIG. 1

FIG. 2a

FIG. 2b

FIG. 3a

FIG. 3b

Access point AP

First medium access control (MAC)

Second medium access control (MAC)

Physical layer (PHY)

AI processing module

FIG. 3c

Station STA

Physical layer (PHY)

Medium access control (MAC)

AI processing module

FIG. 4a

Station STA

Physical layer (PHY)

First medium access control (MAC)

Second medium access control (MAC)

AI processing module

FIG. 4b

Station STA

First medium access
control (MAC)

Physical layer
(PHY)

Second medium
access control (MAC)

AI processing module

FIG. 4c

Neural-network processing unit 502

Input
interface
501

Output
interface
503

Input
layer

Hidden
layer

Output
layer

FIG. 5

FIG. 6

FIG. 7a

(An input includes carrier
sense information, action
information, and a PER)

(A quantity of output neurons
is 2, and an activation
function is softmax)

Input
information
indication

Function
indication

Neural
network
parameter

Output
information
indication

Input control
module

Output control
module

Neural network module

Carrier sense
result

Received power

ACK

Action
information

Channel idle time

PER

Input
layer

Hidden
layer

Output
layer

Basic
observation
information

Derived
observation
information

Action
decision
module

(argmax)

Action

FIG. 7b

A first communication apparatus obtains at least one of input indication information, function indication information, output indication information, or parameter indication information

801

The first communication apparatus performs, based on an input layer and an output layer, a function indicated by the function indication information

802

The first communication apparatus outputs a result obtained after a neural network performs a function

803

FIG. 8

First communication apparatus

Second communication apparatus

901: Function request message, where the function request message includes function indication information, and the function request message is used to request to enable a function indicated by the function indication information

902: Function response message, where the function response message is used to respond to a request of the function request message

903: Indication information, where the indication information includes at least one of the following: input indication information, output indication information, and parameter indication information

904: Perform, based on an input layer and an output layer, the function indicated by the function indication information

FIG. 9

```
┌──────────────┐                                              ┌──────────────┐
│    First     │                                              │    Second    │
│communication │                                              │communication │
│  apparatus   │                                              │  apparatus   │
└──────┬───────┘                                              └──────┬───────┘
       │                                                             │
       │   1001: Function request message, where the function        │
       │ request message includes function indication information,    │
       │  and the function indication information is used to notify    │
       │    the first communication apparatus to enable a function    │
       │◄──────indicated by the function indication information────────│
       │                                                             │
       │    1002: Function response message, where the function       │
       │  response message is used to respond to a request of the     │
       │──────────────function request message───────────────────────►│
       │                                                             │
       │      1003: Indication information, where the indication       │
       │  information includes at least one of the following: input    │
       │◄─indication information and output indication information─────│
```

┌─────────────────────────────────────┐
│ 1004: Perform, based on an input layer │
│ and an output layer, the function indicated │
│  by the function indication information │
└─────────────────────────────────────┘

FIG. 10

## INTERNATIONAL SEARCH REPORT

| International application No. |
| --- |
| **PCT/CN2023/085703** |

### A. CLASSIFICATION OF SUBJECT MATTER

H04W28/18(2009.01)i;G06N3/04(2023.01)i;G06N3/08(2023.01)i

According to International Patent Classification (IPC) or to both national classification and IPC

### B. FIELDS SEARCHED

Minimum documentation searched (classification system followed by classification symbols)

IPC: H04W G06N

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 神经网络, 输入, 输出, 指示, 信道, 参数, 功能, neural network, DNN, input, output, indicate, channel, parameter, function

### C. DOCUMENTS CONSIDERED TO BE RELEVANT

| Category* | Citation of document, with indication, where appropriate, of the relevant passages | Relevant to claim No. |
| --- | --- | --- |
| X | CN 112639833 A (KONINKL PHILIPS NV) 09 April 2021 (2021-04-09) description, paragraphs [0008]-[0137], and figures 1-4 | 1-21 |
| X | CN 110689117 A (BEIJING BAIDU NETCOM SCIENCE AND TECHNOLOGY CO., LTD.) 14 January 2020 (2020-01-14) description, paragraphs [0028]-[0095], and figures 1-5 | 1-21 |
| A | CN 112152948 A (HUAWEI TECHNOLOGIES CO., LTD.) 29 December 2020 (2020-12-29) entire document | 1-21 |
| A | CN 112997435 A (GOOGLE INC.) 18 June 2021 (2021-06-18) entire document | 1-21 |
| A | US 2020160042 A1 (ADOBE INC.) 21 May 2020 (2020-05-21) entire document | 1-21 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 May 2023** | **18 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/085703**

| Patent document cited in search report | | | Publication date (day/month/year) | Patent family member(s) | | | Publication date (day/month/year) |
|---|---|---|---|---|---|---|---|
| CN | 112639833 | A | 09 April 2021 | EP | 3617953 | A1 | 04 March 2020 |
| | | | | US | 2021264271 | A1 | 26 August 2021 |
| | | | | WO | 2020043545 | A1 | 05 March 2020 |
| CN | 110689117 | A | 14 January 2020 | None | | | |
| CN | 112152948 | A | 29 December 2020 | CN | 112152948 | B | 03 December 2021 |
| CN | 112997435 | A | 18 June 2021 | RU | 2739483 | C1 | 24 December 2020 |
| | | | | US | 2021064996 | A1 | 04 March 2021 |
| | | | | WO | 2021045748 | A1 | 11 March 2021 |
| | | | | EP | 3808024 | A1 | 21 April 2021 |
| | | | | EP | 3808024 | B1 | 16 March 2022 |
| | | | | BR | 112020014657 | A2 | 22 March 2022 |
| | | | | US | 11397893 | B2 | 26 July 2022 |
| US | 2020160042 | A1 | 21 May 2020 | US | 2021004576 | A1 | 07 January 2021 |
| | | | | US | 11594077 | B2 | 28 February 2023 |
| | | | | US | 10817713 | B2 | 27 October 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210357164